# EUROPEAN PATENT APPLICATION

(11) **EP 4 611 353 A1**
(43) Date of publication of application: **03.09.2025**
(21) Application number: 23887974.6
(22) Date of filing: 07.11.2023
(51) Int. Cl.: H04L 69/14

(54) **MULTI-LINK COMMUNICATION METHOD AND APPARATUS**

(30) Priority: 07.11.2022 CN 202211385738
(71) Applicant: Huawei Technologies Co., Ltd., Shenzhen, Guangdong 518129 (CN)
(72) Inventor: GAN, Ming, Shenzhen, Guangdong 518129 (CN); LIN, Yousi, Shenzhen, Guangdong 518129 (CN); LI, Yunbo, Shenzhen, Guangdong 518129 (CN); YANG, Mao, Xi'an, Shaanxi 710072 (CN); LI, Bo, Xi'an, Shaanxi 710072 (CN)
(74) Representative: Thun, Clemens
(86) International application number: PCT/CN2023/130051
(87) International publication number: WO 2024/099285

(57) **Abstract**

A multi-link communication method and an apparatus are disclosed, are used in a wireless local area network system that supports 802.11 series protocols such as a next-generation Wi-Fi protocol of IEEE 802.11ax, for example, 802.11be, Wi-Fi 7, or EHT, and a next-generation protocol of 802.11be, for example, Wi-Fi 8 or UHR, or may be used in a UWB-based wireless personal local area network system, a sensing (sensing) system, and the like. The method includes: A station in a multi-link device generates a communication frame, and sends the communication frame. A peer station operating on a same associated link as the sending station of the communication frame receives the communication frame, and tears down a TWT agreement based on the communication frame. The communication frame includes a first field and a second field. The first field indicates one or more links, and the second field indicates to tear down a TWT agreement or a TWT plan between multi-link devices. Embodiments of this application can effectively improve flexibility of tearing down the TWT agreement.

## Description

This application claims priority to Chinese Patent Application No. 202211385738.5, filed with the China National Intellectual Property Administration on November 7, 2022 and entitled "MULTI-LINK COMMUNICATION METHOD AND APPARATUS", which is incorporated herein by reference in its entirety.

### TECHNICAL FIELD

This application relates to the field of communication technologies, and in particular, to a multi-link communication method and an apparatus.

### BACKGROUND

In the next-generation Wi-Fi extremely high throughput (extremely high throughput, EHT) protocol of the Institute of Electrical and Electronics Engineers (institute of electrical and electronics engineers, IEEE) 802.11, an ultra-large bandwidth of a new frequency band above 6 GHz may be used to transmit information packets, and multiple non-consecutive links may also be aggregated by using a multi-link cooperation technology to form an ultra-large bandwidth.

The multi-link cooperation technology can aggregate a larger bandwidth, and can also share a medium access control (medium access control, MAC) layer on multiple links, to flexibly transmit information packets, or simultaneously send information packets of a same service to a same station. For example, a device implementing the multi-link cooperation technology may be referred to as a multi-link device. Multi-link devices can be associated with each other through one link. In this way, multiple links can be quickly associated with each other. A target wake time agreement (target wake time agreement, TWT agreement) may be set up for one or more links between the MLDs.

However, in a multi-link scenario, how to tear down the TWT agreement needs to be urgently resolved.

### SUMMARY

This application provides a multi-link communication method and an apparatus, to effectively implement flexibility of tearing down a TWT agreement.

According to a first aspect, an embodiment of this application provides a multi-link communication method. The method includes: generating a communication frame, where the communication frame includes a first field and a second field, the first field indicates one or more links, and the second field indicates to tear down a target wake time TWT agreement or a TWT plan between multi-link devices; and sending the communication frame.

The communication frame may be referred to as a TWT teardown frame, a TWT delete frame, a TWT information frame, or the like. The first field may be referred to as a link information field. For example, the first field may be used to carry a link identifier of each of the one or more links, or the first field may be used to carry a bitmap, and each bit in the bitmap indicates whether to tear down a corresponding link. The second field may include a teardown all TWT (teardown all TWT) field or a teardown all TWT setup on all links (teardown all TWT setup on all links) field. The TWT agreement may correspond to an individual TWT negotiation type, and the TWT plan may correspond to a broadcast TWT negotiation type.

In this embodiment of this application, the first field and the second field are used. A receive end of the communication frame can effectively learn of, based on the two fields, the TWT agreement or the TWT plan that is torn down by the receive end. This effectively improves flexibility of tearing down the TWT agreement.

In a possible implementation, if a value of the second field is a first value, the communication frame indicates to tear down all TWT agreements or TWT plans on the one or more links indicated by the first field.

The first value may be equal to 1. If the value of the second field is the first value, a value of a TWT flow identifier field in the communication frame is reserved (reserved), or a value of a broadcast TWT identifier field is reserved (reserved).

In this embodiment of this application, if the value of the second field is the first value, the receive end of the communication frame may tear down, on the link indicated by the first field, all the TWT agreements on the one or more links indicated by the first field. For example, there may be one or more TWT agreements on one link. For example, when the first field indicates one link, the receive end of the communication frame may remove one or more TWT agreements on the link. For another example, when the first field indicates a plurality of links, the receive end of the communication frame may tear down one or more TWT agreements on each of the plurality of links. The value of the second field is the first value, so that the receive end of the communication frame may tear down all the TWT agreements or all the TWT plans on the one or more links indicated by the first field. This effectively improves efficiency of tearing down the TWT agreement or TWT plan and reduces signaling overheads.

In a possible implementation, if a value of the second field is a second value, the communication frame indicates to tear down a TWT agreement that is on each of the one or more links indicated by the first field and that corresponds to a combination including a TWT flow identifier, or the communication frame indicates to tear down a TWT plan that is on each of the one or more links indicated by the first field and that corresponds to a combination including a broadcast TWT identifier.

The second value may be equal to 0. If the value of the second field is the second value, the receive end of the communication frame may tear down the TWT agreement that is on the link indicated by the first field and that corresponds to the combination including the TWT flow identifier. For example, if the first field indicates one link, the receive end of the communication frame tears down a TWT agreement (or a TWT plan) that is on the link and that corresponds to the combination including the TWT flow identifier (broadcast TWT identifier). For another example, if the first field indicates a plurality of links, the receive end of the communication frame may tear down TWT agreements (or TWT plans) that are on the plurality of links and that correspond to the combination including the TWT flow identifier (broadcast TWT identifier).

In this embodiment of this application, the TWT agreement is torn down based on the first field and different values of the second field, so that the receive end can accurately learn of the TWT agreement or the TWT plan that needs to be torn down by the receive end. This improves efficiency and flexibility of tearing down the TWT agreement.

In a possible implementation, the communication frame further includes a third field, and the third field is used to carry the TWT flow identifier, or the third field is used to carry the broadcast TWT identifier.

In this embodiment of this application, based on different values of the second field, the third field may be used to carry a specific TWT flow identifier or broadcast TWT identifier, or the third field may be set to reserved (reserved). Therefore, the receive end may accurately learn of, based on the first field, the second field, and the third field, the TWT agreement or the TWT plan that needs to be torn down by the receive end. This improves efficiency and flexibility of tearing down the TWT agreement.

In a possible implementation, the TWT agreement corresponds to any one of the following combinations that each include the TWT flow identifier: a combination of the TWT flow identifier, a medium access control MAC address of a station on each of the one or more links indicated by the first field, and a MAC address of a peer station on the link indicated by the first field, or a combination of the TWT flow identifier, a MAC address of a multi-link device with which a transmit end of the communication frame is affiliated, a MAC address of a multi-link with which a receive end of the communication frame is affiliated, and the link indicated by the first field.

Content corresponding to the foregoing TWT agreement may also be referred to as an element of the TWT agreement, an element for identifying the TWT agreement, information for uniquely identifying the TWT agreement, or the like. The foregoing station and peer station are relative to the same link.

In a possible implementation, the TWT plan corresponds to any one of the following combinations that each include the broadcast TWT identifier: a combination of the broadcast TWT identifier and a medium access control MAC address of an access station on each of the one or more links indicated by the first field, or a combination of the broadcast TWT identifier, a MAC address of a multi-link device with which an access station on each of the one or more links indicated by the first indication is affiliated, and the link indicated by the first field.

Content corresponding to the foregoing TWT plan may also be referred to as an element of the TWT plan, an element for identifying the TWT plan, or information for uniquely identifying the TWT plan.

In a possible implementation, the first field is included in a multi-link operation information element in the communication frame.

In a possible implementation, the second field is included in a TWT flow field in the communication frame.

According to a second aspect, an embodiment of this application provides a multi-link communication method. The method includes: receiving a communication frame, where the communication frame includes a first field and a second field, the first field indicates one or more links, and the second field indicates to tear down a target wake time TWT agreement or a TWT plan between multi-link devices; and tearing down the TWT agreement or the TWT plan based on the communication frame.

In a possible implementation, the method further includes: determining the TWT agreement based on any one of the following combinations that each include a TWT flow identifier: a combination of the TWT flow identifier, a medium access control MAC address of a station on each of the one or more links indicated by the first field, and a MAC address of a peer station on the link indicated by the first field, or a combination of the TWT flow identifier, a MAC address of a multi-link device with which a transmit end of the communication frame is affiliated, a MAC address of a multi-link with which a receive end of the communication frame is affiliated, and the link indicated by the first field; or
determining the TWT plan based on any one of the following combinations that each include a broadcast TWT identifier: a combination of the broadcast TWT identifier and a medium access control MAC address of an access station on each of the one or more links indicated by the first field, or a combination of the broadcast TWT identifier, a MAC address of a multi-link device with which an access station (for example, a transmit end of the communication frame) on each of the one or more links indicated by the first field is affiliated, and the link indicated by the first field.

In a possible implementation, the tearing down the TWT agreement or the TWT plan based on the communication frame includes: if a value of the second field is a first value, tearing down all TWT agreements or all TWT plans on each of the one or more links indicated by the first field.

In a possible implementation, the tearing down the TWT agreement or the TWT plan based on the communication frame includes:
if a value of the second field is a second value, tearing down a TWT agreement that is on each of the one or more links indicated by the first field and that corresponds to the TWT flow identifier, or if a value of the second field is a second value, tearing down a TWT plan that is on each of the one or more links indicated by the first field and that corresponds to the broadcast TWT identifier.

In a possible implementation, the first field is included in a multi-link operation information element in the communication frame.

In a possible implementation, the second field is included in a TWT flow field in the communication frame.

According to a third aspect, an embodiment of this application provides a multi-link communication method. A plurality of associated links have been established between a multi-link device with which a transmit end of a communication frame is affiliated and a multi-link device with which a receive end of the communication frame is affiliated. The method includes:
generating the communication frame, where the communication frame includes indication information, and the indication information indicates to tear down TWT agreements or TWT plans on the plurality of associated links established between the multi-link devices; and sending the communication frame.

According to a fourth aspect, an embodiment of this application provides a multi-link communication method. A plurality of associated links have been established between a multi-link device with which a transmit end of a communication frame is affiliated and a multi-link device with which a receive end of the communication frame is affiliated. The method includes:
receiving the communication frame, where the communication frame includes indication information, and the indication information indicates to tear down TWT agreements or TWT plans on the plurality of associated links established between the multi-link devices; and tearing down, based on the communication frame, the TWT agreements or the TWT plans on the plurality of associated links established between the multi-link devices.

With reference to the third aspect or the fourth aspect, in a possible implementation, a value of the indication information is a first value.

With reference to the third aspect or the fourth aspect, in a possible implementation, the indication information is included in a TWT flow field in the communication frame.

The indication information may be used to carry a teardown all TWT field or a teardown all TWT setup on all links field. The TWT agreement may correspond to an individual TWT negotiation type, and the TWT plan may correspond to a broadcast TWT negotiation type.

With reference to the third aspect or the fourth aspect, in a possible implementation, the TWT agreement corresponds to any one of the following combinations that each include a TWT flow identifier:
a combination of the TWT flow identifier, a medium access control MAC address of a station on a link indicated by a first field, and a MAC address of a peer station on the link indicated by the first field, or a combination of the TWT flow identifier, a MAC address of the multi-link device with which the transmit end of the communication frame is affiliated, a MAC address of the multi-link with which the receive end of the communication frame is affiliated, and a link indicated by a first field; and
the TWT plan corresponds to any one of the following combinations that each include a broadcast TWT identifier: a combination of the broadcast TWT identifier and a medium access control MAC address of an access station on the link indicated by the first field, or a combination of the broadcast TWT identifier, a MAC address of a multi-link device with which an access station on the link indicated by the first field is affiliated, and the link indicated by the first field.

According to a fifth aspect, an embodiment of this application provides a communication apparatus, configured to perform the method in any one of the first aspect or the possible implementations of the first aspect. The communication apparatus includes units that perform the method in any one of the first aspect or the possible implementations of the first aspect.

According to a sixth aspect, an embodiment of this application provides a communication apparatus, configured to perform the method in any one of the second aspect or the possible implementations of the second aspect. The communication apparatus includes units that perform the method in any one of the second aspect or the possible implementations of the second aspect.

According to a seventh aspect, an embodiment of this application provides a communication apparatus, configured to perform the method in any one of the third aspect or the possible implementations of the third aspect. The communication apparatus includes units that perform the method in any one of the third aspect or the possible implementations of the third aspect.

According to an eighth aspect, an embodiment of this application provides a communication apparatus, configured to perform the method in any one of the fourth aspect or the possible implementations of the fourth aspect. The communication apparatus includes units that perform the method in any one of the fourth aspect or the possible implementations of the fourth aspect.

In the third aspect, the fourth aspect, the fifth aspect, or the sixth aspect, the communication apparatus each may include a transceiver unit and a processing unit. For specific descriptions of the transceiver unit and the processing unit, refer to the apparatus embodiments shown below.

According to a ninth aspect, an embodiment of this application provides a communication apparatus. The communication apparatus includes a processor, configured to perform the method in any one of the first aspect or the possible implementations of the first aspect. Alternatively, the processor is configured to execute a program stored in a memory. When the program is executed, the method in any one of the first aspect or the possible implementations of the first aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver, and the transceiver is configured to receive a signal or send a signal.

According to a tenth aspect, an embodiment of this application provides a communication apparatus. The communication apparatus includes a processor, configured to perform the method in any one of the second aspect or the possible implementations of the second aspect. Alternatively, the processor is configured to execute a program stored in a memory. When the program is executed, the method in any one of the second aspect or the possible implementations of the second aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver, and the transceiver is configured to receive a signal or send a signal.

According to an eleventh aspect, an embodiment of this application provides a communication apparatus. The communication apparatus includes a processor, configured to perform the method in any one of the third aspect or the possible implementations of the third aspect. Alternatively, the processor is configured to execute a program stored in a memory. When the program is executed, the method in any one of the third aspect or the possible implementations of the third aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver, and the transceiver is configured to receive a signal or send a signal.

According to a twelfth aspect, an embodiment of this application provides a communication apparatus. The communication apparatus includes a processor, configured to perform the method in any one of the fourth aspect or the possible implementations of the fourth aspect. Alternatively, the processor is configured to execute a program stored in a memory. When the program is executed, the method in any one of the fourth aspect or the possible implementations of the fourth aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver, and the transceiver is configured to receive a signal or send a signal.

According to a thirteenth aspect, an embodiment of this application provides a communication apparatus. The communication apparatus includes a logic circuit and an interface. The logic circuit is coupled to the interface. The logic circuit is configured to generate a communication frame. The interface is configured to output the communication frame.

According to a fourteenth aspect, an embodiment of this application provides a communication apparatus. The communication apparatus includes a logic circuit and an interface. The logic circuit is coupled to the interface. The interface is configured to input a communication frame. The logic circuit is configured to tear down a TWT agreement based on the communication frame.

For specific descriptions of the thirteenth aspect and the fourteenth aspect, refer to the method embodiments shown below.

According to a fifteenth aspect, an embodiment of this application provides a computer-readable storage medium. The computer-readable storage medium is configured to store a computer program, and when the computer program is run on a computer, the method in any one of the first aspect or the possible implementations of the first aspect is performed.

According to a sixteenth aspect, an embodiment of this application provides a computer-readable storage medium. The computer-readable storage medium is configured to store a computer program, and when the computer program is run on a computer, the method in any one of the second aspect or the possible implementations of the second aspect is performed.

According to a seventeenth aspect, an embodiment of this application provides a computer-readable storage medium. The computer-readable storage medium is configured to store a computer program, and when the computer program is run on a computer, the method in any one of the third aspect or the possible implementations of the third aspect is performed.

According to an eighteenth aspect, an embodiment of this application provides a computer-readable storage medium. The computer-readable storage medium is configured to store a computer program, and when the computer program is run on a computer, the method in any one of the fourth aspect or the possible implementations of the fourth aspect is performed.

According to a nineteenth aspect, an embodiment of this application provides a computer program product. The computer program product includes a computer program, and when the computer program is run on a computer, the method in any one of the first aspect or the possible implementations of the first aspect is performed.

According to a twentieth aspect, an embodiment of this application provides a computer program product. The computer program product includes a computer program, and when the computer program is run on a computer, the method in any one of the second aspect or the possible implementations of the second aspect is performed.

According to a twenty-first aspect, an embodiment of this application provides a computer program product. The computer program product includes a computer program, and when the computer program is run on a computer, the method in any one of the third aspect or the possible implementations of the third aspect is performed.

According to a twenty-second aspect, an embodiment of this application provides a computer program product. The computer program product includes a computer program, and when the computer program is run on a computer, the method in any one of the fourth aspect or the possible implementations of the fourth aspect is performed.

According to a twenty-third aspect, an embodiment of this application provides a computer program. When the computer program is run on a computer, the method in any one of the first aspect or the possible implementations of the first aspect is performed.

According to a twenty-fourth aspect, an embodiment of this application provides a computer program. When the computer program is run on a computer, the method in any one of the second aspect or the possible implementations of the second aspect is performed.

According to a twenty-fifth aspect, an embodiment of this application provides a computer program. When the computer program is run on a computer, the method in any one of the third aspect or the possible implementations of the third aspect is performed.

According to a twenty-sixth aspect, an embodiment of this application provides a computer program. When the computer program is run on a computer, the method in any one of the fourth aspect or the possible implementations of the fourth aspect is performed.

According to a twenty-seventh aspect, an embodiment of this application provides a wireless communication system. The wireless communication system includes a transmit end and a receive end. The transmit end is configured to perform the method in any one of the first aspect or the possible implementations of the first aspect. The receive end is configured to perform the method in any one of the second aspect or the possible implementations of the second aspect.

According to a twenty-eighth aspect, an embodiment of this application provides a wireless communication system. The wireless communication system includes a transmit end and a receive end. The transmit end is configured to perform the method in any one of the third aspect or the possible implementations of the third aspect. The receive end is configured to perform the method in any one of the fourth aspect or the possible implementations of the fourth aspect.

### BRIEF DESCRIPTION OF DRAWINGS

FIG. 1a is a schematic diagram of an architecture of a communication system according to an embodiment of this application;
FIG. 1b is a schematic diagram of an architecture of another communication system according to an embodiment of this application;
FIG. 2a is a schematic diagram of a manner of connection between a multi-link AP and a multi-link STA according to an embodiment of this application;
FIG. 2b is a schematic diagram of a manner of connection between a multi-link AP and a multi-link STA according to an embodiment of this application;
FIG. 2c is a schematic diagram of an antenna of a multi-link device according to an embodiment of this application;
FIG. 3a is a schematic diagram of a communication scenario according to an embodiment of this application;
FIG. 3b is a schematic diagram of a communication scenario according to an embodiment of this application;
FIG. 4 is a schematic flowchart of a multi-link communication method according to an embodiment of this application;
FIG. 5a is a schematic flowchart of a method for setting up a TWT agreement according to an embodiment of this application;
FIG. 5b is a schematic diagram of a scenario of setting up a TWT agreement according to an embodiment of this application;
FIG. 6a is a schematic diagram of a structure of a TWT element whose negotiation type is an individual TWT type according to an embodiment of this application;
FIG. 6b is a schematic diagram of a structure of a TWT element whose negotiation type is a broadcast TWT type according to an embodiment of this application;
FIG. 7a is a schematic diagram of a structure of a communication frame according to an embodiment of this application;
FIG. 7b is a schematic diagram of a structure of a communication frame according to an embodiment of this application;
FIG. 7c is a schematic diagram of a structure of a communication frame according to an embodiment of this application;
FIG. 7d is a schematic diagram of a structure of a communication frame according to an embodiment of this application;
FIG. 8a is a schematic diagram of a structure of a communication frame according to an embodiment of this application;
FIG. 8b is a schematic diagram of a structure of a communication frame according to an embodiment of this application;
FIG. 9 is a schematic diagram of a structure of a communication apparatus according to an embodiment of this application;
FIG. 10 is a schematic diagram of a structure of a communication apparatus according to an embodiment of this application; and
FIG. 11 is a schematic diagram of a structure of a communication apparatus according to an embodiment of this application.

### DESCRIPTION OF EMBODIMENTS

To make objectives, technical solutions, and advantages of this application clearer, the following further describes this application with reference to the accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, a process, a method, a system, a product, or a device that includes a series of steps or units is not limited to listed steps or units, but optionally further includes another unlisted step or unit, or optionally further includes another inherent step or unit of the process, the method, the system, the product, or the device.

An "embodiment" mentioned in this specification means that a specific feature, structure, or characteristic described with reference to an embodiment may be included in at least one embodiment of this application. The phrase shown at various locations in the specification may not necessarily mean a same embodiment, and is not an independent or alternative embodiment exclusive from another embodiment. It may be explicitly and implicitly understood by a person skilled in the art that embodiments described in the specification may be combined with another embodiment.

In this application, "at least one piece (item)" means one or more, "a plurality of" means two or more, "at least two pieces (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. "Or" indicates that two relationships may exist. For example, only A exists and only B exists. If A and B are not mutually exclusive, it indicates that three relationships exist. For example, only A exists, only B exists, and both A and B exist. The character "/" usually indicates an "or" relationship between the associated objects. "At least one item (piece) of the following" or a similar expression thereof means any combination of these items. For example, at least one item (piece) of a, b, or c may indicate: a, b, c, "a and b", "a and c", "b and c", or "a, b, and c".

The technical solutions provided in embodiments of this application may be applied to a WLAN system, for example, Wi-Fi. The method provided in embodiments of this application is applicable to IEEE 802.11 series protocols, for example, the 802.11a/b/g protocol, the 802.11n protocol, the 802.11ac protocol, the 802.11 ax protocol, the 802.11be protocol, or a next-generation protocol. Details are not listed herein one by one. The technical solutions provided in embodiments of this application may be further applied to a wireless personal area network (wireless personal area network, WPAN) based on a UWB technology. The method provided in embodiments of this application is applicable to IEEE802.15 series protocol, for example, the 802.15.4a protocol, the 802.15.4z protocol, the 802.15.4ab protocol, or a future-generation UWB WPAN protocol. Details are not listed herein one by one. The technical solutions provided in embodiments of this application may be further applied to other communication systems, for example, an internet of things (internet of things, IoT) system, a vehicle-to-X (vehicle-to-X, V2X) system, and a narrow band internet of things (narrow band internet of things, NB-IoT) system, may be applied to a device in an internet of vehicles, an internet of things node, a sensor, and the like in an internet of things (internet of things, IoT), a smart camera, a smart remote controller, and a smart water or electricity meter in a smart home, a sensor in a smart city, and the like, or may be further applied to a long term evolution (long term evolution, LTE) system, a 5th generation (5th generation, 5G) communication system, a new communication system emerging in future communication development, and the like.

Although embodiments of this application are mainly described by using a WLAN as an example, especially a network applied to IEEE 802.11 series standards, for example, a system that supports Wi-Fi 7 and may also be referred to as an extremely high throughput (extremely high throughput, EHT) system, or a system that supports Wi-Fi 8 and may also be referred to as an ultra high reliability (ultra high reliability, UHR) system or an ultra high reliability and throughput (ultra high reliability and throughput, UHRT) system. A person skilled in the art easily understands that various aspects in embodiments of this application may be extended to other networks that uses various standards or protocols, for example, Bluetooth (Bluetooth), a high-performance radio LAN (high-performance radio LAN, HIPERLAN) (a wireless standard similar to the IEEE 802.11 standard, mainly used in Europe) and a wide area network (WAN) or another network that is known or developed in future. Therefore, regardless of a used coverage area and a used wireless access protocol, the various aspects provided in embodiments of this application are applicable to any suitable wireless network.

The method provided in embodiments of this application may be implemented by a communication apparatus in a wireless communication system. For example, the communication apparatus may be an access point (access point, AP) or a station (station, STA).

The access point is an apparatus having a wireless communication function, supports communication or sensing according to a WLAN protocol, has a function of communicating or sensing with another device (for example, a station or another access point) in a WLAN network. It is clear that the access point may further have a function of communicating or sensing with another device. Alternatively, the access point is equivalent to a bridge that connects a wired network and a wireless network. A main function of the access point is to connect various wireless network clients together and then connect the wireless network to an ethernet. In a WLAN system, the access point may be referred to as an access point station (AP STA). The apparatus having the wireless communication function may be an entire device, or may be a chip, a processing system, or the like installed in the entire device. The device in which the chip or the processing system is installed may implement the method and functions in embodiments of this application under control of the chip or the processing system. The AP in embodiments of this application is an apparatus that provides a service to a STA, and may support 802.11 series protocols, a subsequent protocol, or the like. For example, the access point may be an access point for a terminal (for example, a mobile phone) to access a wired (or wireless) network, and is mainly deployed in a home, a building, and a park. A typical coverage radius is tens of meters to 100-odd meters. It is clear that the access point may alternatively be deployed outdoors. For another example, the AP may be a communication entity, for example, a communication server, a router, a switch, or a bridge, or the AP may include various forms of macro base stations, micro base stations, relay stations, and the like. It is clear that the AP may alternatively be a chip or a processing system in these devices in various forms, to implement the method and functions in embodiments of this application.

The station is an apparatus having a wireless communication function, supports communication or sensing according to a WLAN protocol, and has a capability of communicating or sensing with another station or the access point in the WLAN network. In the WLAN system, the station may be referred to as a non-access point station (non-access point station, non-AP STA). For example, the STA is any user communication device that allows a user to communicate with or sense an AP and further communicate with the WLAN. The apparatus having the wireless communication function may be an entire device, or may be a chip, a processing system, or the like installed in the entire device. The device in which the chip or the processing system is installed may implement the method and functions in embodiments of this application under control of the chip or the processing system. For example, the station may be a wireless communication chip, a wireless sensor, or a wireless communication terminal, and may also be referred to as a user. For another example, the station may be a mobile phone, a tablet computer, a set-top box, a smart television, a smart wearable device, a vehicle-mounted communication device, or a computer that supports a Wi-Fi communication function.

The WLAN system can provide high-speed and low-latency transmission. With continuous evolution of WLAN application scenarios, the WLAN system is to be applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops and warehousing. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display screen, a television, a stereo, a refrigerator, or a washing machine) in a smart home, a node in an internet of things, an entertainment terminal (for example, a wearable device such as augmented reality (augmented reality, AR) or virtual reality (virtual reality, VR)), a smart device (for example, a printer, a projector, a speaker, or a stereo) in smart office, an internet of vehicles device in an internet of vehicles, an infrastructure (for example, a vending machine, a self-service navigation console of a supermarket, a self-service cashier, or a self-service ordering machine) in a daily life scenario, a device in a large sports and music venue, and the like. For example, the access point and the station each may be a device used in an internet of vehicles, an internet of things node, a sensor, or the like in an internet of things, a smart camera, a smart remote controller, and a smart water or electricity meter in a smart home, a sensor in a smart city, or the like. Specific forms of the STA and the AP are not limited in embodiments of this application, and are merely examples for description herein.

For example, a communication system to which the method provided in embodiments of this application may be applied may include an access point and a station. For example, embodiments of this application are applicable to a scenario of communication or sensing between an AP and a STA, between APs, or between STAs in a WLAN. This is not limited in embodiments of this application. Optionally, the AP may communicate with or sense a single STA, or the AP may simultaneously communicate with or sense a plurality of STAs. Specifically, communication or sensing between the AP and the plurality of STAs may further be classified into downlink transmission in which the AP simultaneously sends signals to the plurality of STAs, and uplink transmission in which the plurality of STAs send signals to the AP. A WLAN communication protocol may be supported between an AP and a STA, between APs, or between STAs. The communication protocol may include IEEE802.11 series protocols, for example, is applicable to the 802.11be standard, and certainly is also applicable to a standard later than 802.11be.

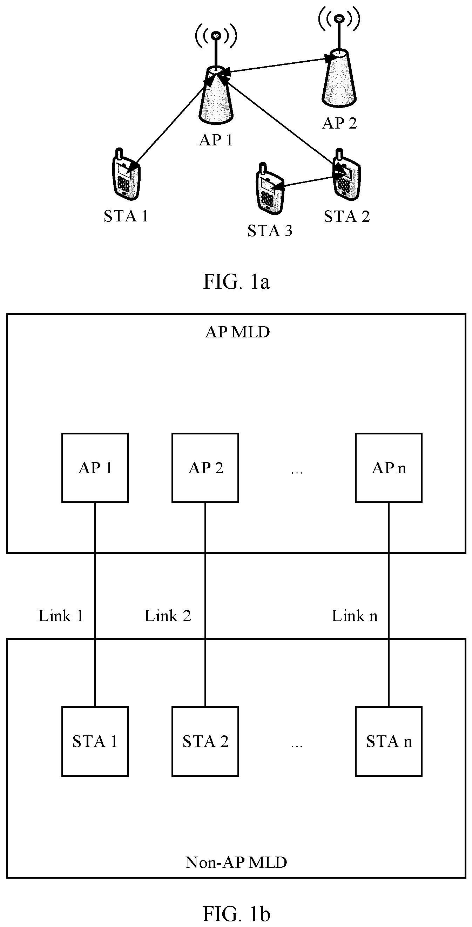

FIG. 1a is a schematic diagram of an architecture of a communication system according to an embodiment of this application. The communication system may include one or more APs and one or more STAs. FIG. 1a shows two access points: an AP 1 and an AP 2, and three stations: a STA 1, a STA 2, and a STA 3. It may be understood that one or more APs may communicate with one or more STAs. Certainly, an AP may communicate with an AP, and a STA may communicate with a STA. The method provided in embodiments of this application is applicable to, but is not limited to single-user uplink/downlink transmission, multi-user uplink/downlink transmission, vehicle-to-everything (vehicle-to-everything, V2X, where X may represent anything) communication, and device-to-device (device-to-device, D2D) communication. For example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

It may be understood that, in FIG. 1a, an example in which the STA is a mobile phone and the AP is a router is used, and this does not constitute a limitation on types of the AP and the STA in embodiments of this application. In addition, FIG. 1a shows only two APs and three STAs as an example. However, there may be more or fewer APs or STAs. This is not limited in embodiments of this application.

The multi-link device includes one or more affiliated stations. The affiliated station is a logical station, and may operate on one link, one frequency band, one channel, or the like. The affiliated station may be an AP or a non-AP STA. For ease of description, in embodiments of this application, a multi-link device whose affiliated station is an AP may be referred to as a multi-link AP, a multi-link AP device, or an AP multi-link device (AP multi-link device, AP MLD). A multi-link device whose affiliated station is a non-AP STA is referred to as a multi-link STA, a multi-link STA device, or a STA multi-link device (STA multi-link device), or a multi-link device whose affiliated station is a non-AP STA is referred to as a multi-link non-AP, a multi-link non-AP device, a non-AP multi-link device (non-AP multi-link device, non-AP MLD), or the like. The multi-link device (which may be a non-AP MLD or an AP MLD herein) is a communication apparatus having a wireless communication function. The communication apparatus may be an entire device, or may be a chip, a processing system, or the like installed in the entire device. The device in which the chip or the processing system is installed may implement the method and functions in embodiments of this application under control of the chip or the processing system.

The multi-link device MLD may implement wireless communication in compliance with 802.11 series protocols, for example, in compliance with an extremely high throughput (Extremely High Throughput, EHT) protocol, or in compliance with an 802.11be-based or 802.11be-compatible protocol, thereby implementing communication with another device. Certainly, the another device may be a multi-link device or may not be a multi-link device.

Each logical station may operate on one link, but a plurality of logical stations are allowed to operate on a same link. A link identifier mentioned below represents one station operating on one link. In other words, if there is more than one logical station on one link, more than one link identifier is required to represent the logical stations. The link identifier mentioned below sometimes also indicates a station operating on the link. If data transmission is performed between a multi-link device and another multi-link device, before communication, the multi-link device and the another multi-link device may first negotiate or communicate with each other about a correspondence between a link identifier and a link or a station on a link, or an AP multi-link device indicates a correspondence between a link identifier and a link or a station on a link based on a broadcast management frame, for example, a beacon frame. Therefore, during data transmission, the link identifier can be carried without transmitting a large amount of signaling to indicate the link or the station on the link. This reduces signaling overheads and improves transmission efficiency.

The following uses an example in which the foregoing one multi-link device is an AP multi-link device and the foregoing another multi-link device is a STA multi-link device for description. In an example, a management frame, for example, a multi-link probe response frame, sent when the AP multi-link device establishes a basic service set (basic service set, BSS) carries one or more link elements, and a link information field included in the multi-link element may be used to establish a correspondence between a link identifier and a station operating on a corresponding link. The link identifier identifies a combination <an operating class (operating class) of the link, a channel number (channel number), and a BSSID (BSS identifier) of an AP (or a MAC address of an AP)>.

FIG. 1b is a schematic diagram of an architecture of another communication system according to an embodiment of this application. As shown in FIG. 1b, the AP MLD includes an AP 1, an AP 2, ..., and an AP n. The non-AP MLD includes a STA 1, a STA 2, ..., and a STA n. Herein, n is a positive integer. The AP MLD and the non-AP MLD may perform parallel communication on a link 1, a link 2, ..., and a link n. The STA 1 in the non-AP MLD establishes an association relationship with the AP 1 in the AP MLD. The STA 2 in the non-AP MLD establishes an association relationship with the AP 2 in the AP MLD. The STA n in the non-AP MLD establishes an association relationship with the AP n in the AP MLD. Therefore, one or more STAs in the non-AP MLD and one or more APs in the AP MLD may communicate after establishing an association relationship. A frequency band on which the multi-link device (including the AP MLD and the non-AP MLD) operates may include but is not limited to sub 1 GHz, 2.4 GHz, 5 GHz, 6 GHz, and high-frequency 60 GHz.

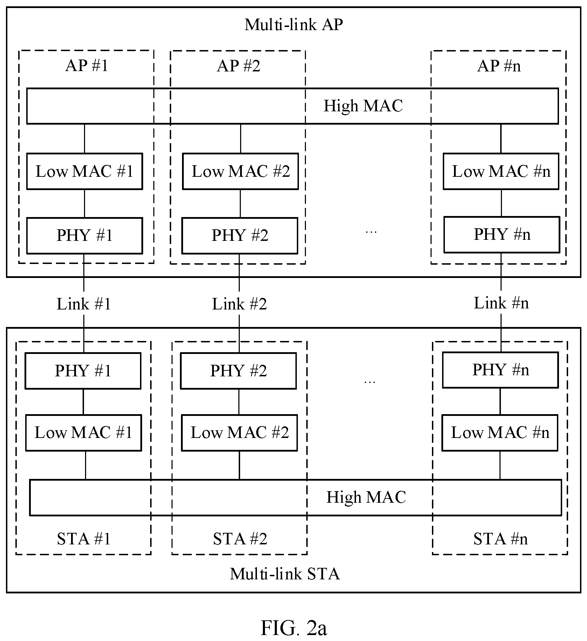

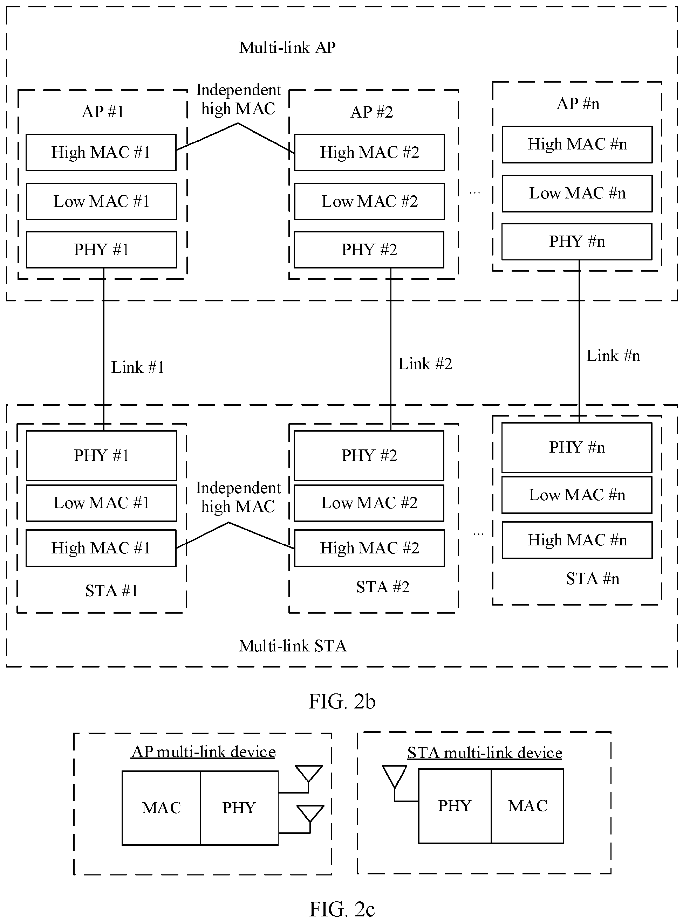

FIG. 2a and FIG. 2b each are a schematic diagram of a manner of connection between a multi-link AP and a multi-link STA according to an embodiment of this application. The 802.11 standard focuses on an 802.11 physical layer (physical layer, PHY) part and a medium access control (medium access control, MAC) layer part in a multi-link device. Therefore, FIG. 2a and FIG. 2b each show only a PHY and a MAC layer as an example.

As shown in FIG. 2a and FIG. 2b, a multi-link device (for example, a multi-link AP and a multi-link STA) may include a physical layer (physical layer, PHY) processing circuit (PHY #1, PHY #2, and PHY #n shown in FIG. 2a) and a medium access control (medium access control, MAC) layer processing circuit. The physical layer processing circuit may be configured to process a physical layer signal, and the MAC layer processing circuit may be configured to process a MAC layer signal. Further, the MAC layer may be further divided into a high MAC (high-MAC) layer (for example, high MAC shown in FIG. 2a or high MAC #1 to high MAC #n shown in FIG. 2b) and a plurality of low MAC (low-MAC) layers (for example, low MAC #1 or low MAC #2 to low MAC #n as shown in each of FIG. 2a and FIG. 2b). As shown in FIG 2a, a plurality of APs included in the multi-link AP are independent of each other at a low MAC layer and a PHY, and share a high MAC layer. A plurality of STAs included in the multi-link STA are independent of each other at a low MAC layer and a PHY, and share a high MAC layer. The high MAC layer is separately connected to a plurality of low MAC layers, that is, the high MAC layer is shared by a plurality of links. As shown in FIG. 2b, a plurality of APs included in the multi-link AP are independent of each other at a low MAC layer and a PHY, and are also independent of each other at a high MAC layer. A plurality of STAs of the multi-link STA device are independent of each other at a low MAC layer and a PHY, and are also independent of each other at a high MAC layer. The high MAC layer mainly completes operations such as allocation, encryption, and decryption on a sequence number (sequence number, SN) and a packet number (packet number, PN) of a MAC service data unit (MAC service data unit, MSDU). Each lower MAC layer mainly completes operations such as assembling a MAC protocol data unit (MAC protocol data unit, MPDU) on a respective link, channel access, and packet sending and receiving acknowledgment.

In FIG. 2a, the PHY #1 layer, the low MAC #1 layer, and the high MAC layer in the multi-link AP may be considered as an AP #1, the PHY #2 layer, the low MAC #2 layer, and the high MAC layer may be considered as an AP #2, ..., and the PHY #n layer, the low MAC #n layer, and the high MAC layer may be considered as an AP #n. That is, it may be understood that the multi-link AP includes n AP entities. In the multi-link STA, the situation is similar, to be specific, the high MAC layer in the multi-link STA is also shared by a plurality of links; and the PHY #1 layer, the low MAC #1 layer, and the high MAC layer are considered as a STA #1, the PHY #2 layer, the low MAC #2 layer, and the high MAC layer are considered as a STA #2, ..., and the PHY #n layer, the low MAC #n layer, and the high MAC layer are considered as a STA #n. That is, it may be understood that the multi-link STA includes n STA entities. As shown in FIG. 2a, the PHY #1 of the AP #1 in the multi-link AP is connected to the PHY #1 of the STA #1 in the multi-link STA, and therefore the AP #1 in the multi-link AP and the STA #1 in the multi-link STA communicate with each other on a link (for example, a link #1 shown in FIG. 2a). The PHY #2 of the AP #2 in the multi-link AP is connected to the PHY #2 of the STA #2 in the multi-link STA, and therefore the AP #2 in the multi-link AP and the STA #2 in the multi-link STA communicate with each other on a link (for example, a link #2 shown in FIG. 2a). The PHY #n of the AP #n in the multi-link AP is connected to the PHY #n of the STA #n in the multi-link STA, and therefore the AP #n in the multi-link AP and the STA #n in the multi-link STA communicate with each other on a link (for example, a link #n shown in FIG. 2a). For a description of FIG. 2b, refer to FIG. 2a. Details are not described herein again.

For example, the high MAC layer or the low MAC layer may be implemented by one processor in a chip system of the multi-link device, or may be implemented by different processing modules in a chip system. For example, the multi-link device in embodiments of this application may be a single-antenna device, or may be a multi-antenna device. For example, the device may be a device with more than two antennas. A number of antennas included in the multi-link device is not limited in embodiments of this application. FIG. 2c is a schematic diagram of an antenna of the multi-link device according to this embodiment of this application. In FIG. 2c, an example in which an AP multi-link device is a multi-antenna device, and a STA multi-link device is a single-antenna device is used. This should not be construed as a limitation on this embodiment of this application. In this embodiment of this application, the multi-link device may allow services of a same access type to be transmitted on different links, or even allow same data packets to be transmitted on different links. Alternatively, the multi-link device may not allow services of a same access type to be transmitted on different links, but may allow services of different access types to be transmitted on different links. This is not limited in embodiments of this application.

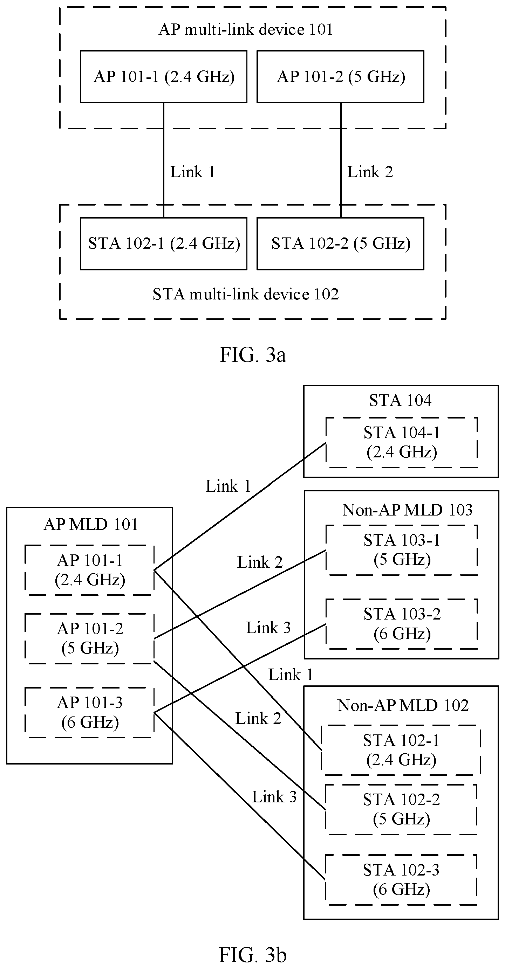

A frequency band on which the multi-link device operates may include but is not limited to sub 1 GHz, 2.4 GHz, 5 GHz, 6 GHz, and high-frequency 60 GHz. FIG. 3a and FIG. 3b are two schematic diagrams of communication between a multi-link device and another device in a wireless local area network through a plurality of links.

FIG. 3a shows a scenario in which an AP multi-link device 101 communicates with a STA multi-link device 102. The AP multi-link device 101 includes an affiliated AP 101-1 and an affiliated AP 101-2, the STA multi-link device 102 includes an affiliated STA 102-1 and an affiliated STA 102-2, and the AP multi-link device 101 communicates with the STA multi-link device 102 in parallel on a link 1 and a link 2.

For example, FIG. 3b shows a scenario in which an AP MLD 101 communicates with a non-AP MLD 102, a non-AP MLD 103, and a STA 104. The AP MLD 101 includes an affiliated AP 101-1 to an affiliated AP 101-3. The non-AP MLD 102 includes an affiliated STA 102-1, an affiliated STA 102-2, and an affiliated STA 102-3. The non-AP MLD 103 includes an affiliated STA 103-1 and an affiliated STA 103-2. The STA 104 is a single-link device, and includes a STA 104-1. The AP MLD 101 may separately communicate with the non-AP MLD 102 on a link 1, a link 2, and a link 3, communicate with the non-AP MLD 103 on the link 2 and the link 3, and communicate with the STA 104 on the link 1. In an example, the STA 104 operates on a 2.4 GHz frequency band, in the non-AP MLD 103, the STA 103-1 operates on a 5 GHz frequency band, and the STA 103-2 operates on a 6 GHz frequency band; and in the non-AP MLD 102, the STA 102-1 operates on the 2.4 GHz frequency band, the STA 102-2 operates on the 5 GHz frequency band, and the STA 102-3 operates on the 6 GHz frequency band. Uplink or downlink data may be transmitted between the AP 101-1 that operates on the 2.4 GHz frequency band and that is in the AP MLD 101, and the STA 104 and the STA 102-1 in the non-AP MLD 102 on the link 1. Uplink or downlink data may be transmitted between the AP 101-2 that operates on the 5 GHz frequency band and that is in the AP MLD 101 and the STA 103-1 that operates on the 5 GHz frequency band and that is in the non-AP MLD 103 on the link 2, and uplink or downlink data may be further transmitted between the AP 101-2 and the STA 102-2 that operates on the 5 GHz frequency band and that is in the non-AP MLD 102 on the link 2. Uplink or downlink data may be transmitted between the AP 101-3 that operates on the 6 GHz frequency band and that is in the AP MLD 101 and the STA 102-3 that operates on the 6 GHz frequency band and that is in the non-AP MLD 102 on the link 3, and uplink or downlink data may be further transmitted between the AP 101-3 and the STA 103-2 in the non-AP MLD on the link 3.

It should be noted that FIG. 3a only shows that the AP multi-link device supports two frequency bands, and FIG. 3b shows only an example in which the AP MLD 101 supports three frequency bands (2.4 GHz, 5 GHz, and 6 GHz), each frequency band corresponds to one link, and the AP MLD 101 may operate on one or more links of the link 1, the link 2, or the link 3. On an AP side or a STA side, the link herein may also be understood as a station operating on the link. In an actual application, the AP MLD and the non-AP MLD may further support more or fewer frequency bands, that is, the AP MLD and the non-AP MLD may operate on more links or fewer links. This is not limited in embodiments of this application.

It should be noted that FIG. 3a and FIG. 3b are merely simple schematic diagrams, and do not constitute any limitation on the protection scope of embodiments of this application.

In a current protocol, an element related to a TWT agreement includes: a TWT flow identifier (TWT flow identifier), a MAC address of a TWT requesting station (MAC address of TWT requesting STA), and a MAC address of a TWT responding station (MAC address of TWT responding STA). The TWT requesting station is a station that sends a TWT element to request to set up TWT, and a TWT request field in the request type field in a TWT element field is set to 1. The TWT responding station is a station that sends the TWT element to respond to setup of the TWT, and a TWT request field in the request type field in the TWT element field is set to 0. The TWT agreement may be torn down based on the foregoing element. For example, in a currently used method for tearing down the TWT agreement, both communication parties for tearing down the TWT agreement need to be consistent with both communication parties for setting up the TWT agreement. In other words, MAC addresses of both the communication parties for tearing down the TWT agreement include the MAC address of the TWT requesting station and the MAC address of the TWT responding station. According to this method, in a single-link scenario, when the TWT agreement set up by both the communication parties on one link needs to be torn down, a single-link transmit end may send a TWT teardown frame (TWT teardown frame) to a single-link receive end, so that the TWT agreement can be directly torn down. When the foregoing method is applied to the single-link scenario, the method is convenient, simple, and highly feasible. It may be understood that, for specific descriptions of the TWT agreement, refer to related descriptions of REVme draft 2.0 in the 802.11 standard protocol. Details are not described in this embodiment of this application.

However, when the foregoing method is applied to a multi-link scenario, a plurality of links are usually associated between multi-link devices. A TWT agreement on one link may be set up by a station corresponding to another link (for example, if the one link herein is in a sleep state or a busy state, the another link may set up the TWT agreement for the one link), or a TWT agreement on some links may be set up by a station corresponding to a link other than the some links between the multi-link devices, therefore, if the TWT agreement is still torn down by using the foregoing method for tearing down the TWT agreement, flexibility of tearing down the TWT agreement is not high. For example, a link established between two multi-link devices includes a link 1 and a link 2, and the link 1 sets up a TWT agreement on the link 2. In other words, a TWT requesting station and a TWT responding station of the TWT agreement on the link 2 are stations corresponding to the link 1. If a station on the link 2 sends a TWT teardown frame, a receive end of the TWT teardown frame considers that a MAC address of the TWT requesting station is a MAC address of the sending station on the link 2, instead of a MAC address of a station on the link 1 that originally sets up the TWT agreement. As a result, the station on the link 2 cannot tear down the TWT agreement set up by the link 1.

In view of this, embodiments of this application provide a multi-link communication method and an apparatus, to effectively improve flexibility of tearing down a TWT agreement.

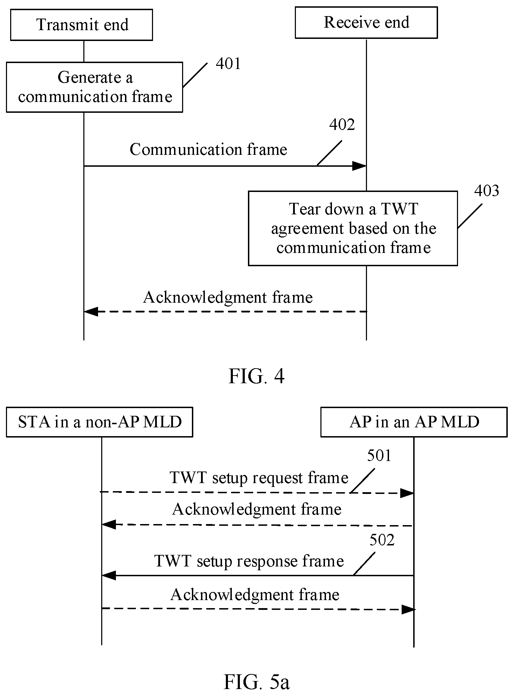

FIG. 4 is a schematic flowchart of a multi-link communication method according to an embodiment of this application. The method may be applied to the systems shown in FIG. 1a and FIG. 1b, or the method may be applied to the multi-link devices shown in FIG. 3a and FIG. 3b. For ease of description, the following describes the method provided in embodiments of this application by using a transmit end and a receive end as examples. The transmit end may be understood as a STA that sends a communication frame, and the receive end may be understood as a STA that receives the communication frame. Alternatively, the transmit end may be understood as a STA in a multi-link device configured to send a communication frame, and the receive end may be understood as a STA in a multi-link device configured to receive the communication frame. It may be understood that, in some embodiments of this application, a non-AP STA and an AP STA are not specifically distinguished, but a STA is used to describe the method provided in embodiments of this application. In embodiments of this application, multi-link devices for both communication parties may be both AP MLDs or both STA MLDs, or one multi-link device is an AP MLD, and the other multi-link device is a STA MLD. Details are not listed herein one by one. It may be understood that, in embodiments of this application, the method provided in embodiments of this application is described by using two sides: the transmit end and the receive end. However, there may be another apparatus in a process of information transmission between the transmit end and the receive end. For example, information between the transmit end and the receive end is forwarded by using a forwarding apparatus. Therefore, in embodiments of this application, mutual information transfer can be implemented by technical means that can be completed by a person skilled in the art, and an apparatus other than the transmit end and the receive end is not limited in embodiments of this application.

Before the method shown in FIG. 4 is described, the following describes in detail a method for setting up a TWT agreement provided in an embodiment of this application. Certainly, the following method for setting up the TWT agreement is merely an example, and should not be construed as a limitation on embodiments of this application. In an actual application, there may be another method for setting up a TWT agreement. Details are not listed one by one.

FIG. 5a is a schematic flowchart of a method for setting up a TWT agreement according to an embodiment of this application. The method is shown by using an example in which a non-AP MLD initiates a TWT setup request. This should not be understood as a limitation on embodiments of this application. As shown in FIG. 5a, the method includes the following steps.

501: A STA in the non-AP MLD sends a TWT setup request frame, and correspondingly, an AP in an AP MLD receives the TWT setup request frame.

It may be understood that the TWT setup request frame and a TWT setup response frame shown in this embodiment of this application are merely examples. For example, the TWT setup request frame and the TWT setup response frame may be collectively referred to as a TWT setup frame, and a difference lies in that a TWT request bit in a TWT element in the TWT setup frame is set to "1" or "0". Alternatively, the TWT setup request frame and the TWT setup response frame may be collectively referred to as a management frame used to set up the TWT agreement, or the like. Details are not listed one by one.

Optionally, after receiving the TWT setup request frame, the AP in the AP MLD may send an acknowledgment frame to the STA in the non-AP MLD, where the acknowledgment frame is used to acknowledge the TWT setup request frame.

It may be understood that step 501 is an optional step. Alternatively, sending the acknowledgment frame used to acknowledge the TWT setup request frame is also an optional step.

502: The AP in the AP MLD sends the TWT setup response frame, and correspondingly, the STA in the non-AP MLD receives the TWT setup response frame.

Optionally, after receiving the TWT setup response frame, the STA in the non-AP MLD may send an acknowledgment frame to the AP in the AP MLD, where the acknowledgment frame is used to acknowledge the TWT setup response frame.

The following describes the TWT setup request frame and the TWT setup response frame in detail.

The TWT request frame includes a TWT element, and the TWT setup response frame includes a TWT element. Other elements in the TWT request frame and the TWT response frame are not shown one by one in embodiments of this application. The TWT element includes at least one of the following fields: an element number field, a length field, a control field, and a TWT parameter information field. For example, the control field includes at least one of the following fields: a null data packet paging (null data packet paging, NDP paging) indication field, a responder power management (power management, PM) mode (responder PM mode) field, a negotiation type (negotiation type) field, a TWT information frame disabled (TWT information frame disabled) field, a wake duration unit (wake duration unit) field, a link identifier bitmap present field (bitmap present (bitmap present) field for short), and a reserved (reserved) field.

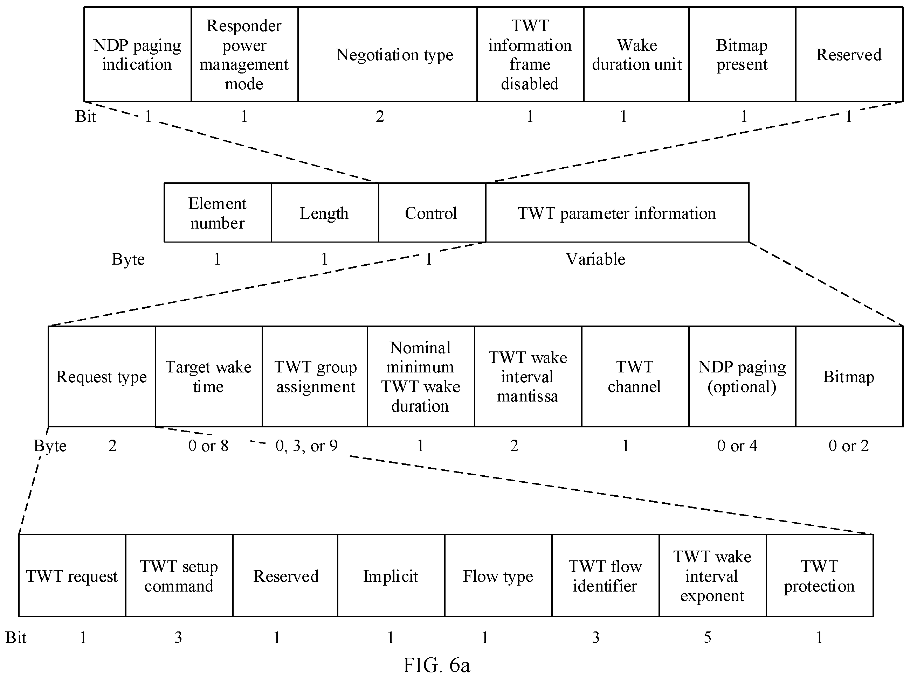

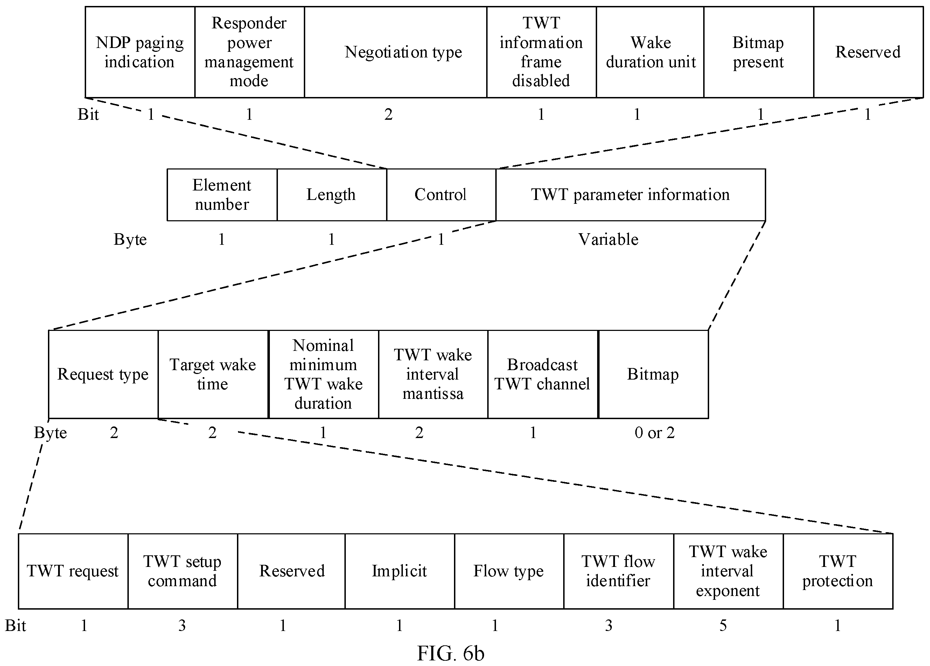

The negotiation type included in the control field includes an individual TWT type and a broadcast TWT type. FIG. 6a is a schematic diagram of a structure of a TWT element whose negotiation type is an individual TWT type according to this embodiment of this application. As shown in FIG. 6a, when the negotiation type indicates the individual TWT type, the TWT parameter information field includes at least one of the following: a request type (request type) field, a target wake time (target wake time) field, a TWT group assignment (TWT group assignment) field, a nominal minimum TWT wake duration (nominal minimum TWT wake duration) field, a TWT wake interval mantissa (TWT wake interval mantissa) field, a TWT channel (TWT channel) field, a null data packet paging (NDP paging) field, and a link identifier bitmap (link ID bitmap) field. FIG. 6b is a schematic diagram of a structure of a TWT element whose negotiation type is a broadcast TWT type according to this embodiment of this application. As shown in FIG. 6b, when the negotiation type indicates the broadcast TWT type, the TWT parameter information field includes at least one of the following: a request type field, a target wake time field (which is determined by a link-based timing synchronization function (timing synchronization function, TSF)), a nominal minimum TWT wake duration field, a TWT wake interval mantissa field, a broadcast TWT channel field, and a link identifier bitmap field.

For example, the request type field in the TWT parameter information field includes at least one of the following: a TWT request field, a TWT setup command (TWT setup command) field, a reserved field, an implicit (implicit) field, a flow type (flow type) field, and a TWT flow identifier (TWT flow identifier) field, a TWT wake interval exponent (TWT wake interval exponent) field, and a TWT protection field.

The request type in the TWT parameter information field may include some parameters related to the TWT setup request and the TWT setup response. If a value of the TWT request field in the TWT element is 1, it indicates that a frame corresponding to the TWT element is a TWT setup request frame. If a value of the TWT request field in the TWT element is 0, it indicates that a frame corresponding to the TWT element is a TWT setup response frame. For example, in a TWT negotiation process, the TWT setup command field in the TWT element in the TWT setup request frame may be used to carry a value of a "suggested TWT" (in this case, the value is 1). The TWT setup command field in the TWT element in the TWT setup response frame may be used to carry a value of an "accepted TWT" (in this case, the value is 4). In this case, a TWT agreement is successfully set up.

It may be understood that, for descriptions of the foregoing fields, refer to a related standard, a protocol, or the like. Details are not described in this embodiment of this application one by one.

The following describes the TWT flow identifier field, the link identifier bitmap present field, and the link identifier bitmap field in embodiments of this application in detail.

The TWT flow identifier field includes a TWT flow identifier for identifying a request or providing TWT information.

The control field in the TWT element provided in this embodiment of this application includes the link identifier bitmap present field, and the TWT parameter information field includes the link identifier bitmap field, to perform TWT negotiation for another link on one link. For example, the link identifier bitmap present field may indicate whether the link identifier bitmap field is present (included) in the TWT parameter information field. A length of the link identifier bitmap field may be determined based on a number of links established between the AP MLD and the non-AP MLD. This manner is highly flexible. Alternatively, a length of the link identifier bitmap field may be determined based on a maximum number of links that are allowed to be established between the AP MLD and the non-AP MLD. This manner is simple. Alternatively, a length of the link identifier bitmap field may be constant, for example, 16 bits or 8 bits. For ease of description, the following uses an example in which the length of the link identifier bitmap field is 16 bits for description. Certainly, the maximum number shown herein is merely an example. With evolution of the standard, the maximum number of links allowed to be established between the multi-link devices may change subsequently. When the maximum number changes, the length of the link identifier bitmap field shown in this embodiment of this application may also change. It may be understood that a name of the link identifier bitmap field is not limited in embodiments of this application. For example, the link identifier bitmap field may alternatively be referred to as a bitmap field, a link bitmap field, or the like. Details are not listed one by one.

Each bit in the link identifier bitmap field is in a one-to-one correspondence with a link, and a value of each bit may indicate whether to set up a TWT agreement on a corresponding link. For example, content carried in the link identifier bitmap field is 0010 1110 0000 0001 that sequentially correspond to a link 1 to a link 16. A value of each bit being 1 indicates to set up a TWT agreement on a corresponding link. A value of each bit being 0 indicates not to set up a TWT agreement on a corresponding link. Therefore, the link identifier bitmap field indicates that TWT agreements may be respectively set up on the link 3, the link 5, the link 6, the link 7, and the link 16. When values of the link identifier bitmap field in the TWT setup request frame and the link identifier bitmap field in the TWT setup response frame are the same, both communication parties may set up the TWT agreements on the link 3, the link 5, the link 6, the link 7, and the link 16 based on the TWT setup request frame and the TWT setup response frame shown in FIG. 5a. A flow identifier of the TWT agreement is the flow identifier indicated by the TWT flow identifier field in the request type field, and flow identifiers of the TWT agreements set up on the link 3, the link 5, the link 6, the link 7, and the link 16 are the same. It may be understood that the flow identifier of the TWT agreement set up on the link 3 is different from flow identifiers of TWT agreements that have been set up on the link 3. Similarly, the flow identifier of the TWT agreement set up on the link 5 is different from flow identifiers of TWT agreements that have been set up on the link 5. The rest can be deduced by analogy. Optionally, the TWT flow identifier of each TWT agreement needs to be unique in a plurality of TWT agreements set up by an MLD that requests to set up TWT and an MLD that responds to setup of the TWT, or unique in a plurality of TWT agreements set up between an AP and a STA on a corresponding link. Therefore, this can effectively ensure that a TWT agreement specified in a TWT teardown frame is unique, and a teardown error is avoided. Generally, 1 bit in the link identifier bitmap field may be set to 1. In other words, on a link corresponding to the link identifier bitmap field, a value of a bit corresponding to one link may generally be 1. For example, it indicates that the TWT agreement on the corresponding link is set up. Certainly, a plurality of bits in the link identifier bitmap field may also be set to 1. This is not limited in embodiments of this application.

It may be understood that the foregoing link identifier bitmap is merely an example. For example, in an actual application, the foregoing link identifier bitmap present field may alternatively be a link identifier present field or a link identifier exist field. The foregoing link identifier bitmap field may alternatively be a link identifier field. The link identifier present field may indicate the link identifier bitmap field is present (included) in the TWT parameter information field. The link identifier field may identify one or more links. Therefore, both communication parties may set up, based on the link identifier field, a TWT agreement on the one or more links indicated by the link identifier field. For example, both the communication parties may set up, based on content indicated in the TWT element, the TWT agreement on the one or more links indicated by the link identifier field. For example, a maximum of 16 links are allowed to be established between MLDs, and a length of the link identifier field is 4 bits. If content carried in the link identifier field is 0001, it indicates that a TWT agreement needs to be set up on the link 1. For another example, if a length of the link identifier field is 8 bits, and carried content is 0001 0011, it indicates that TWT agreements need to be set up on the link 1 and the link 3. It may be understood that the length of the link identifier field or a correspondence between a value and a meaning of the link identifier field is not limited in embodiments of this application.

To further understand the method for establishing the TWT agreement provided in this embodiment of this application, an example is used below for description.

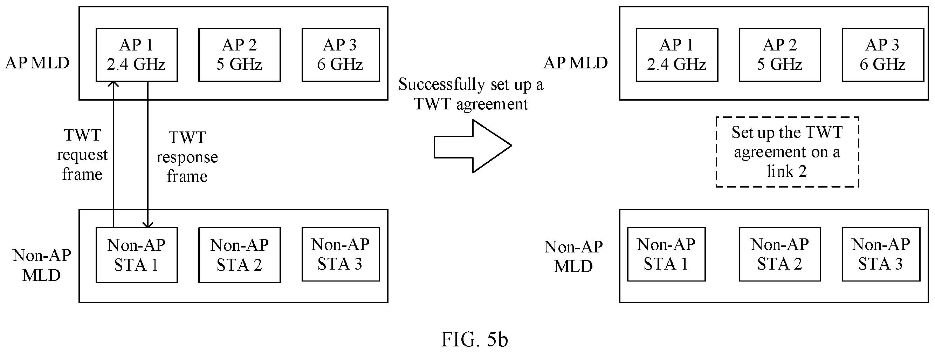

FIG. 5b is a schematic diagram of a scenario of setting up the TWT agreement according to this embodiment of this application. As shown in FIG. 5b, a TWT agreement needs to be set up between the AP MLD and the non-AP MLD through negotiation. For example, the AP MLD includes three affiliated AP stations: an AP 1, an AP 2, and an AP 3 that respectively operate at 2.4 GHz, 5 GHz, and 6 GHz. The non-AP MLD includes three affiliated non-AP stations: a STA 1, a STA 2, and a STA 3. Three links have been associated between the AP MLD and the non-AP MLD: a link 1 between the AP 1 and the STA 1, a link 2 between the AP 2 and the STA 2, and a link 3 between the AP 3 and the STA 3.

For example, the AP MLD and the non-AP MLD may transmit a management frame on the link 1. For example, the STA 1 sends a TWT setup request frame to the AP 1. Correspondingly, the AP 1 receives the TWT setup request frame. The AP 1 sends a TWT setup response frame to the STA 1. Correspondingly, the STA 1 receives the TWT setup response frame. For descriptions of the TWT setup request frame and the TWT setup response frame, refer to the foregoing description. Details are not described herein again. For example, the link identifier bitmap included in the TWT element in the TWT setup request frame indicates that a TWT agreement needs to be set up for the link 2. In this case, the AP MLD and the non-AP MLD may set up the TWT agreement for the link 2. In addition, all related parameters of the TWT agreement are determined based on the TWT element. The target wake time of the TWT element is based on a timing synchronization function (timing synchronization function, TSF) of the link indicated by the link identifier bitmap, and is based on a TSF of the link 2 herein.

The foregoing method for setting up the TWT agreement is merely an example, and should not be construed as a limitation on embodiments of this application.

The following describes the method shown in FIG. 4 in detail. As shown in FIG. 4, the method includes the following steps.

401: A transmit end generates a communication frame.

In this embodiment of this application, the transmit end may be any station (which operates on an associated link) of a multi-link device with which a STA that has set up a TWT agreement is affiliated. Herein, the station may be an AP, or may be a non-AP STA. The communication frame may be a management frame, and the communication frame may include a TWT teardown frame (TWT teardown frame), a TWT delete frame, a TWT teardown request frame, a TWT information frame, or the like.

For example, as shown in Table 1, the communication frame includes a TWT teardown frame, and the TWT teardown frame includes at least one of the following information: a category (category), an unprotected sub 1 GHz action (unprotected S1G action), and a TWT flow (TWT flow).

**Table 1**

| Order (order) in the teardown frame | Information (information) |
|---|---|
| 1 | Category |
| 2 | Unprotected sub 1 GHz action |
| 3 | TWT flow |

If a value of a negotiation type field in a TWT flow field is 0 or 1, the negotiation type field corresponds to individual TWT, or if a value of a negotiation type field in a TWT flow field is 2 or 3, the negotiation type field corresponds to broadcast TWT. When the negotiation type field corresponds to the individual TWT, as shown in Table 2a, the TWT flow field includes at least one of the following fields: a TWT flow identifier (TWT flow identifier) field, a reserved field, the negotiation type (negotiation type) field, and a teardown all TWT (teardown all TWT) field. For example, a length of the TWT flow identifier field may be 3 bits. Certainly, the length of the TWT flow identifier field shown herein is merely an example. For example, with evolution of a standard, the length of the TWT flow identifier field may be extended from 3 bits to more bits, for example, 4 bits.

For example, if the value of the negotiation type field is 3, as shown in Table 2b, the TWT flow field includes at least one of the following fields: a broadcast TWT identifier field, the negotiation type (negotiation type) field, and a teardown all TWT (teardown all TWT) field.

**Table 2a**

| Field name | TWT flow identifier | Reserved | Negotiation type | Teardown all TWT |
|---|---|---|---|---|
| Bit | 3 | 2 | 2 | 1 |

**Table 2b**

| Field name | Broadcast TWT identifier | Negotiation type | Teardown all TWT |
|---|---|---|---|
| Bit | 5 | 2 | 1 |

It may be understood that lengths (or referred to as numbers of bits occupied by the fields) of the fields shown in Table 2a and Table 2b are merely examples, and should not be construed as a limitation on embodiments of this application.

The following describes the communication frame provided in this embodiment of this application with reference to Table 1, Table 2a, and Table 2b. The communication frame may include the following several implementations.

### Implementation 1

The communication frame includes indication information, and the indication information indicates to tear down the TWT agreement or a TWT plan between MLDs. For example, the indication information may indicate to tear down all TWT agreements or TWT plans between the MLDs. In a single-link scenario, if a value of the teardown all TWT field in Table 2a is 1, the TWT flow identifier field is set to reserved. In this case, the teardown all TWT field indicates to tear down all TWT, namely, all TWT on a link. However, the indication information shown in this embodiment of this application may be understood as indicating to tear down all TWT agreements or TWT plans on all associated links between the MLDs. For example, for the individual TWT, the indication information may include a teardown TWT setup on all associated links field, a teardown all TWT setup on all links (teardown all TWT setup on all links) field, or a teardown all TWT field. For example, for the broadcast TWT, the indication information may include a teardown TWT plans setup on all links field, a teardown all TWT setup on all associated links field, or a teardown all TWT field.

### Example 1

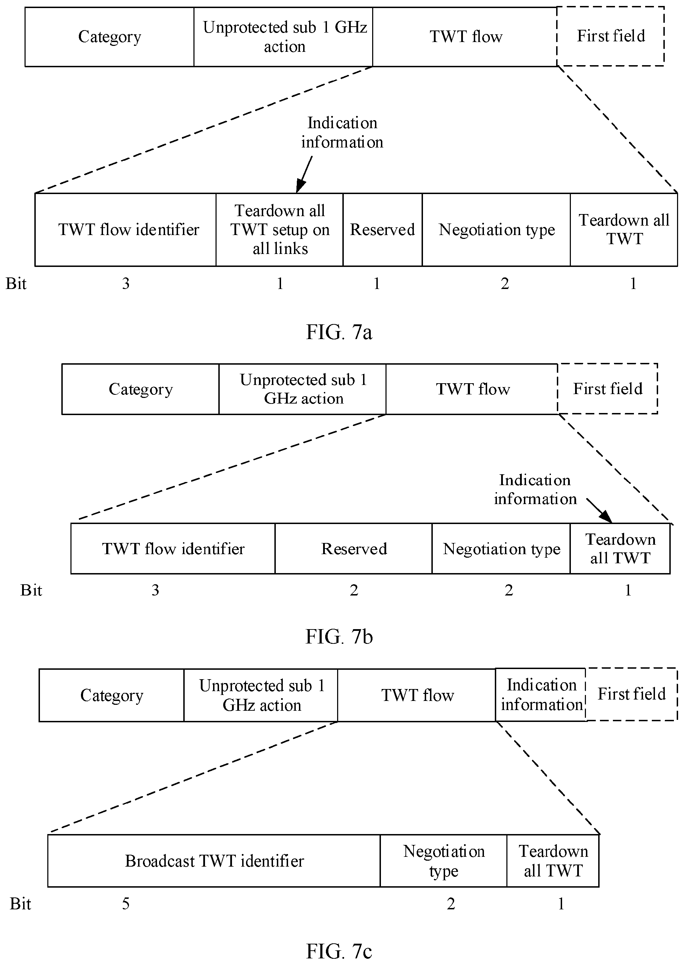

For example, based on Table 2a, in this embodiment of this application, one piece of indication information is added, and the indication information indicates to tear down all TWT agreements on all links between the MLDs. For example, the communication frame includes at least one of the following information: a category, an unprotected sub 1 GHz action, and a TWT flow (as shown in Table 1). As shown in Table 3 or FIG. 7a, the TWT flow field includes at least one of the following fields: a TWT flow identifier field, a teardown all TWT setup on all links (that is, the indication information) field, a reserved field, a negotiation type field, and a teardown all TWT field.

**Table 3**

| Field name | TWT flow identifier | Teardown all TWT setup on all links | Reserved | Negotiation type | Teardown all TWT |
|---|---|---|---|---|---|
| Bit | 3 | 1 | 1 | 2 | 1 |

For example, if a value of the teardown all TWT setup on all links field is 1, the field may indicate to request to tear down all TWT agreements on all links of the MLD with which the transmit end is affiliated, and all the links are associated links established between two MLDs (the MLD with which the transmit end of the communication frame is affiliated and an MLD with which a receive end of the communication frame is affiliated). For another example, if a value of the teardown all TWT setup on all links field is 0, the field may indicate not to request to tear down all TWT agreements on all links of the MLD with which the transmit end is affiliated. In this case, the communication frame may include a first field. For example, the TWT agreement is torn down with reference to an implementation 2 shown below.

### Example 2

For example, the teardown all TWT field may be used as the indication information. For example, as shown in FIG. 7b, the communication frame includes at least one of the following information: a category, an unprotected sub 1 GHz action, and a TWT flow (as shown in Table 1). As shown in Table 2a or FIG. 7b, the TWT flow field includes at least one of the following fields: a TWT flow identifier field, a reserved field, a negotiation type field, and a teardown all TWT field (that is, the indication information). If the value of the teardown all TWT field is 1, and the communication frame does not include an element for carrying a first field, the communication frame may indicate to tear down all TWT agreements on all links of the MLD with which the transmit end is affiliated. All the links shown herein are all associated links established between the MLDs.

For example, when the teardown all TWT field is set to 1, and the TWT teardown frame does not carry an MLO link information element, the TWT teardown frame indicates to request to tear down all TWT agreements on all links of an MLD with which the station is affiliated (A non-AP STA affiliated with a non-AP MLD may tear down all individual TWT agreements setup on all setup links by sending a TWT Teardown frame with the Teardown All TWT field set to 1 if the MLO Link Information element is not present in the TWT Teardown frame.).

It may be understood that the foregoing relationship between the value and a corresponding meaning is merely an example, and should not be construed as a limitation on embodiments of this application. If a value of the teardown all TWT setup on all links field is 0, the field may indicate to request to tear down all TWT agreements on all links of the MLD with which the transmit end is affiliated, and all the links are associated links established between the MLDs. If a value of the teardown all TWT setup on all links field is 1, the field may indicate not to request to tear down all TWT agreements on all links of the MLD with which the transmit end is affiliated.

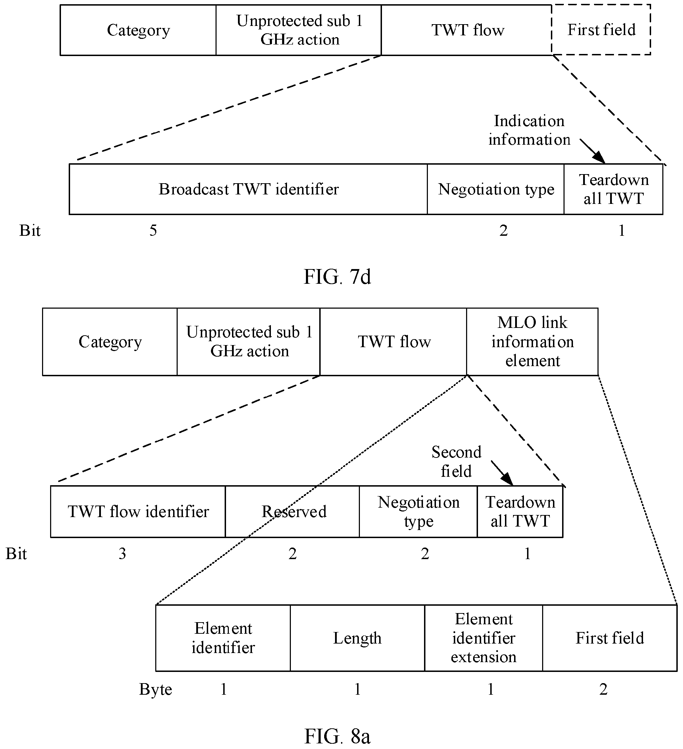

The foregoing example 1 and example 2 are both for the individual TWT, and the foregoing method is also applicable to the broadcast TWT. Because no reserved field is reserved in the TWT flow in the broadcast TWT, the indication information may be carried in the communication frame. As shown in FIG. 7c, the indication information may exist in the communication frame in a form of an element, or the indication information may exist in the communication frame in a form of a field. This is not limited in embodiments of this application. Alternatively, the teardown all TWT field may be reused as the indication information, as shown in FIG. 7d. For descriptions of the broadcast TWT in FIG. 7c and FIG. 7d, adaptively refer to the descriptions of the indication information in the individual TWT. Details are not described herein again. It may be understood that the first field in FIG. 7a to FIG. 7d is merely an example. For a specific description of the first field, refer to the implementation 2.

In this embodiment of this application, in the TWT flow field, the indication information is added or the teardown all TWT field is reused, so that all the TWT agreements can be torn down, and an MLD-level TWT teardown method is implemented. One bit may indicate to tear down all the TWT agreements on all the links between the MLDs. This effectively improves efficiency of tearing down the TWT agreement and reduces signaling overheads.

### Implementation 2

The communication frame includes a first field and a second field. The first field indicates one or more links, and the second field indicates to tear down a TWT agreement between MLDs.

Optionally, the teardown all TWT field in the TWT flow field may be reused as the second field. Optionally, the second field may alternatively be the teardown all TWT setup on all links field in the implementation 1. This is not limited in embodiments of this application. For ease of description, the following uses an example in which the second field includes the teardown all TWT field. However, this should not be understood as a limitation on embodiments of this application.

### Example 3

In an example, if a value of the second field is a first value, the communication frame may indicate to tear down all TWT agreements on each of the one or more links indicated by the first field. A third field (for example, a TWT flow identifier field) in the communication frame is set to reserved. In other words, if the value of the second field is the first value, a value of the TWT flow identifier field in the communication frame is reserved. For example, the value of the TWT flow identifier field may be 0 (only for example) (for example, 000), or the value of the TWT flow identifier field is 111 (only for example).

It may be understood that all TWT agreements shown herein may be understood as: When the first field indicates one link, all the TWT agreements are one or more TWT agreements on the link indicated by the first field. When the first field indicates a plurality of links, all the TWT agreements are all TWT agreements on each of the plurality of links indicated by the first field. When the first field indicates the plurality of links, whether all TWT agreements on the plurality of links are set up based on a same TWT setup request frame is not limited in embodiments of this application. If the value of the second field is the first value, the communication frame does not include the TWT flow identifier field (for the individual TWT), or does not include the broadcast TWT identifier field (for the broadcast TWT), that is, the TWT flow identifier field is set to reserved. The broadcast TWT identifier field is set to be reserved. Therefore, a receive end of the communication frame may tear down all the TWT agreements on each of the one or more links indicated by the first field. Whether the TWT agreements on the plurality of links share a TWT parameter is not limited.

For example, that the first field indicates the one or more links includes: The first field is used to carry a link identifier of each of the one or more links, or the first field is used to carry a link identifier bitmap, where a length of the link identifier bitmap may be constant, for example, 16 bits. In an example, the first field may indicate a link identifier of one link. For example, if a length of the first field is 4 bits, 0001 may indicate a link 1, 0010 may indicate a link 2, and so on. In an example, the first field may be used to carry the link identifier bitmap. For example, if a value of the first field is 0000 0000 0000 0001 (1 indicates that a TWT agreement on a corresponding link needs to be torn down, and 0 indicates that a TWT agreement on a corresponding link does not need to be torn down), the link indicated by the first field is a link 1, and it indicates that a TWT agreement on the link 1 needs to be torn down. Details are not listed herein one by one. In another example, the first field may indicate link identifiers of a plurality of links, or a link identifier bitmap field indicates to tear down TWT agreements on the plurality of links. For descriptions of the first field, refer to the foregoing descriptions of the bitmap field and the link identifier field. Details are not described herein again.

It should be noted that the first field included in the communication frame may be independent of the link identifier bitmap field or the link identifier field in the TWT setup request frame or the TWT setup response frame. As long as a TWT agreement has been set up on the link indicated by the first field in the communication frame, whether the first field in the communication frame needs to be the same as a link identifier bitmap field or a link identifier field in a TWT setup request frame or a TWT setup response frame is not limited in embodiments of this application. It may be understood that a number of TWT agreements or TWT plans that are allowed to be set up on one link is not limited in embodiments of this application. For example, one TWT agreement may be set up on one link, or a plurality of TWT agreements may be set up on one link.

For example, the first field may be carried in an element in the communication frame. For example, the element may be an element newly added relative to Table 1. For example, as shown in Table 4 or FIG. 8a, the communication frame includes a TWT teardown frame, and the TWT teardown frame includes at least one of the following information: a category, an unprotected sub 1 GHz action, a TWT flow, and a multi-link operation (multi-link operation, MLO) link information element (MLO Link Information element).

**Table 4**

| Order (order) | Information (information) |
|---|---|
| 1 | Category |
| 2 | Unprotected sub 1 GHz action |
| 3 | TWT flow |
| 4 | MLO link information element |

It may be understood that a name of the MLO link information element shown in this embodiment of this application is merely an example, and should not be construed as a limitation on embodiments of this application.

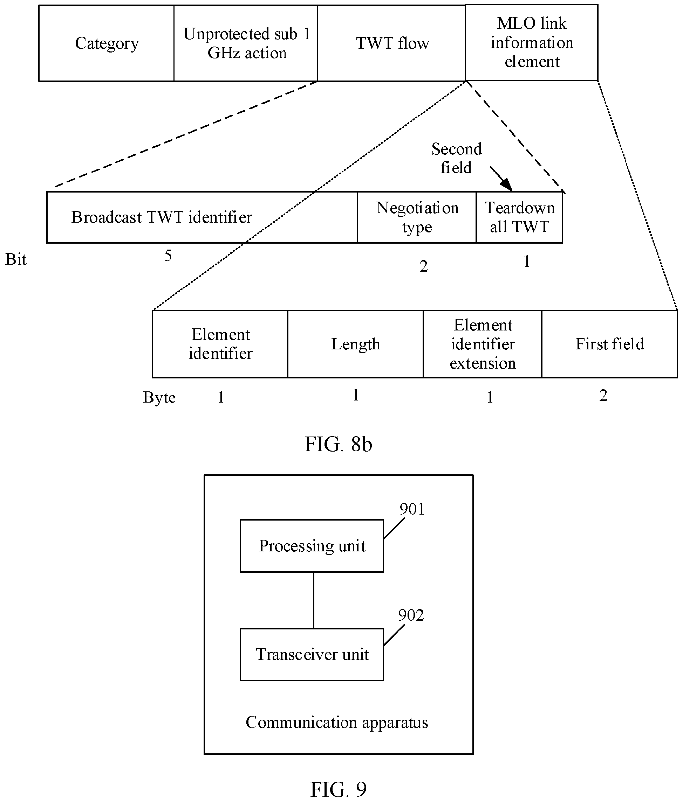

For example, the first field is used to carry the link identifier bitmap. As shown in Table 5 or FIG. 8a, the MLO link information element includes at least one of the following fields: an element identifier (element ID) field, a length (length) field, an element identifier extension (element ID extension) field, and a link identifier bitmap field. It may be understood that a length of the link identifier bitmap field shown in Table 5 is merely an example. For example, the MLO link information element may include the link identifier field, and a length of the link identifier field may be 4 bits. This is not limited in embodiments of this application. It may be understood that the methods shown in Table 4 and Table 5 in this embodiment of this application are applicable to the individual TWT, or applicable to the broadcast TWT, as shown in FIG. 8b. For a specific description of the broadcast TWT shown in FIG. 8b, refer to the description of the individual TWT. Details are not described one by one again.

**Table 5**

| Field name | Element identifier | Length | Element identifier extension | Link identifier bitmap |
|---|---|---|---|---|
| Byte | 1 | 1 | 1 | 2 |

For example, the first value is equal to 1, and the second field is the teardown all TWT field. When the teardown all TWT field is set to 1, and the communication frame carries the MLO link information element, the communication frame requests to tear down all TWT agreements on one or more links indicated by the link identifier bitmap field in the MLO link information element. If the MLO link information element is present in the TWT teardown frame, a non-AP STA affiliated with a non-AP MLD may tear down individual TWT agreements on all links indicated by the link identifier bitmap subfield in the MLO link information element, and the teardown all TWT field is set to 1. The non-AP STA affiliated with the non-AP MLD may send one TWT teardown frame to tear down all TWT agreements. The teardown all TWT field is set to 1. All the TWT agreements are respectively established on the links indicated by the link identifier bitmap field in the MLO link information element. (A non-AP STA affiliated with a non-AP MLD may tear down all individual TWT agreements setup on the link(s) indicated by the Link ID Bitmap subfield of the MLO Link Information element by sending a TWT Teardown frame with the Teardown All TWT field set to 1 if the MLO Link Information element is present in the TWT Teardown frame.) It may be understood that all the links shown herein are links from which the TWT agreements need to be torn down and that are indicated by the link identifier bitmap. For example, if a value of the link identifier bitmap is 0010 0000 0000 0000, and a value of the teardown all TWT field is 1, the communication frame may indicate to tear down all TWT agreements on a link 3.

It may be understood that the foregoing example 3 is mainly for the individual TWT, and the foregoing method is also applicable to the broadcast TWT. For example, when the method is applied to the broadcast TWT, the TWT flow identifier in the example 3 may alternatively be the broadcast TWT identifier. For example, if the value of the second field is the first value, the communication frame may indicate to tear down all TWT plans on each of the one or more links indicated by the first field, and the third field (for example, the broadcast TWT identifier field) in the communication frame is set to reserved. It may be understood that descriptions of combinations corresponding to the TWT agreement in the following example 4 are also applicable to the example 1, the example 2, and the example 3. Details are not described in this embodiment of this application.

### Example 4

In another example, if a value of the second field is a second value, the communication frame may indicate to tear down a TWT agreement that is on one or more links indicated by the first field and that corresponds to a combination including a TWT flow identifier, or the communication frame may indicate to tear down a TWT agreement that is on one or more links indicated by the first field and that corresponds to a combination including a broadcast TWT identifier.

For example, the communication frame further includes a third field, and the third field indicates a TWT flow identifier (or the broadcast TWT identifier). For example, the third field may be the foregoing TWT flow identifier field (or the broadcast TWT identifier field).

Manner 1: The TWT agreement is uniquely identified by or corresponds to the following combination (which may also be understood as that the TWT agreement corresponds to the following combination including the TWT flow identifier): a combination of the TWT flow identifier, a MAC address of a station on the link indicated by the first field, and a MAC address of a peer station of the link indicated by the first field (or collectively referred to as a MAC address of a station corresponding to the link indicated by the first field). The station and the transmit end of the communication frame are affiliated with a same MLD, and the peer station and a receive end of the communication frame are affiliated with a same MLD. The foregoing description may alternatively be that the TWT agreement is uniquely identified by or corresponds to <the TWT flow identifier, the MAC address of the station on the link indicated by the first field, and the MAC address of the peer station of the link indicated by the first field>. For example, the TWT agreement is uniquely identified by or corresponds to the following combination (which may also be understood as that the TWT agreement corresponds to the following combination including the TWT flow identifier): a combination of the TWT flow identifier, a MAC address of a station operating on the link indicated by the link identifier bitmap (MAC address of the STA operating in the link indicated by the Link ID Bitmap field), and a MAC address of a peer station operating on the link indicated by the link identifier bitmap (MAC address of the peer STA operating in the link indicated by the Link ID Bitmap field). Optionally, an element related to the TWT agreement includes: the TWT flow identifier, the MAC address of the station operating on the link indicated by the link identifier bitmap, the MAC address of the peer station operating on the link indicated by the link identifier bitmap, and a link indicated by a link identifier bitmap field. In other words, when the TWT teardown frame is successfully sent or received, a TWT agreement corresponding to a TWT flow number and a MAC address of a station (for example, two stations corresponding to one link) corresponding to a link indicated by a link identifier field (or a bitmap field) in the TWT teardown frame may be torn down. Alternatively, when the TWT teardown frame is successfully sent or received, a TWT agreement corresponding to a TWT flow number, a MAC address of a station corresponding to a link indicated by a link identifier field (or a bitmap field) in the TWT teardown frame, and a MAC address of a peer station corresponding to the link indicated by the link identifier field (or the bitmap field) in the TWT teardown frame may be torn down.

Manner 2: The TWT agreement is uniquely identified by or corresponds to the following combination (which may also be understood as that the TWT agreement corresponds to the following combination including the TWT flow identifier): a combination of the TWT flow identifier, a MAC address of an MLD of a TWT requesting station (MAC address of TWT requesting MLD), a MAC address of an MLD of a TWT responding station (MAC address of TWT responding MLD), and a link indicated by a link identifier field (or a link identifier bitmap field). The foregoing description may alternatively be that the TWT agreement is uniquely identified by or corresponds to <the TWT flow identifier, the MAC address of the MLD of a TWT requesting station (MAC address of TWT requesting MLD), a MAC address of the MLD of the TWT responding station (MAC address of TWT responding MLD), and the link indicated by the link identifier field (or the link identifier bitmap field)>. For example, when the TWT teardown frame is successfully sent or received, a TWT agreement corresponding to a TWT flow number, a MAC address of an MLD requesting the TWT agreement, a MAC address of an MLD responding to the request, and a link indicated by a link identifier field (or a link identifier bitmap field) in the TWT teardown frame may be torn down (When a TWT Teardown frame is successfully transmitted or received, the TWT agreement corresponding to the TWT Flow Identifier field, the TWT requesting MLD MAC address, the TWT responding MLD MAC address, and link ID of the TWT Teardown frame shall be deleted). Alternatively, the TWT agreement is uniquely identified by or corresponds to the following combination (which may also be understood as that the TWT agreement corresponds to the following combination including the TWT flow identifier): a combination of the TWT flow identifier, a MAC address of a multi-link device with which the transmit end of the communication frame is affiliated, a MAC address of a multi-link with which a receive end of the communication frame is affiliated with, and the link indicated by the first field. Generally, the MAC address of the MLD of the TWT requesting station (or the TWT responding station) is the same as the MAC address of the MLD with which the transmit end (or the receive end) of the communication frame is affiliated, or the MAC address of the MLD of the TWT requesting station (or the TWT responding station) is the same as the MAC address of the MLD with which the receive end (or the transmit end) of the communication frame is affiliated.

The MAC address of the MLD is bound to the TWT agreement. This can effectively avoid a problem that the MAC address of the TWT requesting station is invalid because a STA in a non-AP MLD requests to be dissociated after an AP MLD and the non-AP MLD are associated with a link.

Manner 3: The TWT agreement is uniquely identified by or corresponds to a combination <the TWT flow identifier, a MAC address of a TWT requesting station, and a MAC address of a TWT responding station>. However, the TWT requesting station and the TWT responding station may be understood in the following manners.
A. When a link identifier bitmap field or an element in which the link identifier bitmap field is located is not present in a TWT setup frame, the TWT requesting station is a station that sends a TWT element to request to set up TWT, and a TWT request field in a request type field in a TWT element field is set to 1. The TWT responding station is a station that sends a TWT element to respond to setup of the TWT, and a TWT request field in a request type field in the TWT element field is set to 0. For example, when the TWT setup frame does not include the link identifier bitmap field or does not include the element in which the link identifier bitmap field is located, the TWT requesting station and the TWT responding station may set up, based on the TWT setup frame, a TWT agreement for a link corresponding to the TWT requesting station. For example, when the TWT setup frame includes the link identifier bitmap field or includes the element in which the link identifier bitmap field is located, the TWT requesting station and the TWT responding station may set up a TWT agreement for another link (a link other than a link corresponding to the TWT requesting station between MLDs) based on the TWT setup frame, or set up a TWT agreement for a plurality of links based on the TWT setup frame.
B. When a link identifier bitmap field or an element in which the link identifier bitmap field is located is not present in the TWT teardown frame, the TWT requesting station is a station that sends a TWT element to request to set up TWT, and a TWT request field in a request type field in the TWT element field is set to 1. The TWT responding station is a station that sends a TWT element to respond to setup of the TWT, and a TWT request field in a request type field in the TWT element field is set to 0. For example, when the TWT teardown frame does not include the link identifier bitmap field or does not include the element in which the link identifier bitmap field is located, a station that requests to tear down the TWT agreement needs to be consistent with the station that requests to set up the TWT agreement. For example, when the TWT teardown frame includes the link identifier bitmap field or includes the element in which the link identifier bitmap field is located, the TWT requesting station may be different from the station that requests to set up the TWT agreement. In this way, all stations affiliated with a same MLD together with the station that requests to set up the TWT agreement can perform TWT agreement teardown.
C. When a link identifier bitmap field or an element in which the link identifier bitmap field is located is present in a TWT setup frame, the TWT requesting station is a station operating on a link indicated by a link identifier bitmap in a TWT element, the station and a station that sends the TWT element to request to set up TWT are affiliated with a multi-link device, and a TWT request field in a request type field in a TWT element field is set to 1. The TWT responding station is a peer station operating on the link indicated by the link identifier bitmap in the TWT element, the peer station and a station that sends a TWT element to respond to setup of the TWT are affiliated with a multi-link device, and a TWT request field in a request type field in a TWT element field is set to 0.
D. When a link identifier bitmap field or an element in which the link identifier bitmap field is located is present in the TWT teardown frame, the TWT requesting station is a station operating on a link indicated by a link identifier bitmap in the TWT teardown frame, the station and a station that sends the TWT teardown frame are affiliated with a multi-link device. The TWT responding station is a peer station operating on the link indicated by the link identifier bitmap in the TWT teardown frame, and the peer station and a station that receives the TWT teardown frame are affiliated with a multi-link device.

For descriptions of C and D, refer to the descriptions of the manner 1 and the manner 2 shown in this embodiment of this application. Details are not described herein again. For A and B, when the link identifier bitmap field or the element in which the link identifier bitmap field is located is not present in the TWT setup frame, and/or is not present in the TWT teardown frame, it may indicate that the station that requests to tear down the TWT agreement is the station that sets up the TWT agreement, in other words, a MAC address of a station corresponding to a link on which the TWT agreement is set up needs to be consistent with a MAC address of the station that requests to tear down the TWT agreement. Therefore, in this embodiment of this application, both communication parties can implicitly learn of meanings of the TWT requesting station and the TWT responding station depending on whether the link identifier bitmap field is present in the TWT teardown frame. It may be understood that the descriptions of the link identifier bitmap fields shown in A, B, C, and D are merely examples. For example, the link identifier bitmap field may alternatively be a link identifier field.

For example, the second value is equal to 0, and the second field is the teardown all TWT field. When the teardown all TWT field is set to 0, and the communication frame carries the MLO link information element, the communication frame requests to tear down a TWT agreement that is on one or more links indicated by the link identifier bitmap field in the ML O link information element and that meets a correspondence. For the correspondence herein, refer to the manner 1 to the manner 3. It may be understood that the manner 1 to the manner 3 may be used to identify the TWT agreement. Therefore, the manner 1 to the manner 3 are all applicable to the TWT agreement, that is, the manner 1 to the manner 3 are all applicable to the foregoing example 1 to example 4. It may be understood that the receive end may uniquely identify one TWT agreement based on the manner 1 to the manner 3, or the receive end may determine the TWT agreement based on the manner 1 to the manner 3.

For example, a non-AP STA affiliated with a non-AP MLD may send a TWT teardown frame to tear down one or more TWT agreements, where a negotiation type subfield in the TWT teardown frame is set to 0, and a teardown all TWT field is set to 0. The one or more TWT agreements are separately set up on a link corresponding to one or more bits of a link identifier bitmap subfield that is set to 1 in the MLO link information element, where one TWT agreement corresponds to one link, and the TWT agreement separately corresponds to a combination <a TWT flow identifier, a MAC address of a station operating on a link indicated by a link identifier bitmap, and a MAC address of a peer station operating on the link indicated by the link identifier bitmap> or <a TWT flow identifier, a MAC address of a station operating on a link indicated by a link identifier bitmap, a MAC address of a peer station operating on the link indicated by the link identifier bitmap, and the link indicated by the link identifier bitmap field>. (A non-AP STA affiliated with a non-AP MLD may tear down one or more TWT agreements by sending a TWT Teardown frame with the Negotiation Type subfield set to 0 and one or more bits in the Link ID Bitmap subfield of the MLO Link Information element set to 1 and Teardown All TWT field set to 0).

It may be understood that the example 4 is mainly for the individual TWT, and the foregoing method is also applicable to the broadcast TWT. For example, when the method is applied to the broadcast TWT, the TWT flow identifier in the example 4 may alternatively be the broadcast TWT identifier. For example, if the value of the second field is the second value, the communication frame may indicate to tear down a TWT plan that is on each of the one or more links indicated by the first field and that corresponds to the combination including the broadcast TWT identifier. For example, the TWT plan corresponds to any one of the following combinations that each include the broadcast TWT identifier: a combination of the broadcast TWT identifier and a medium access control MAC address of an access station on the link indicated by the first field, or a combination of the broadcast TWT identifier, a MAC address of a multi-link device with which an access station on the link indicated by the first field is affiliated, and the link indicated by the first field. For descriptions of the first field and the MLO link information element, refer to Table 4 and Table 5. Details are not described in this embodiment of this application. It may be understood that, for the individual TWT, the combination including the TWT flow identifier includes the MAC address of the station on the link indicated by the first field and the MAC address of the peer station on the link (or the MAC address of the MLD of the TWT requesting station and the MAC address of the MLD of the TWT responding station). For the broadcast TWT, the combination including the broadcast TWT identifier may include the MAC address of the access station on the link indicated by the first field, or the MAC address of the MLD with which the access station on the link indicated by the first field is affiliated.

In this embodiment of this application, the TWT agreement is torn down based on the first field and different values of the second field, so that the receive end can accurately learn of the TWT agreement or the TWT plan that needs to be torn down by the receive end. This improves efficiency and flexibility of tearing down the TWT agreement.

### Implementation 3

The communication frame includes a first field, and does not include a second field. For example, if the first field is used to carry a link identifier of a link, the communication frame may indicate to tear down a TWT agreement on the link indicated by the first field. For another example, if the first field is used to carry a link identifier bitmap, the communication frame may indicate to tear down a TWT agreement on a link corresponding to a bit with a value 1 in a link identifier bitmap field.

For example, the first field may be carried in the foregoing MLO link information element. For descriptions of a first value and the MLO link information element, refer to the implementation 1 or the implementation 2. Details are not described herein again.

### Implementation 4

A first field may not be independently included in an element, but is included in the communication frame in a form of a field. For example, the communication frame includes a second field and an indication field indicating whether the first field is present. If the indication field occupies 1 bit, optionally, the indication field may be included in the TWT flow field. If the indication field indicates that the first field is present, and the communication frame includes the first field and the second field, for a specific description of the communication frame, refer to the foregoing implementation 2. Details are not described herein again. For another example, if the indication field indicates that the first field is not present, the communication frame includes the second field, and a value of the second field is a first value, the communication frame may indicate to tear down all TWT agreements on all links of an MLD with which the transmit end is affiliated. All the links shown herein are all associated links established between MLDs.

In Table 1, Table 2a, Table 2b, Table 3, Table 4, and Table 5, an example in which the communication frame is the TWT teardown frame is used in the implementations 1 to 4. An example in which the communication frame is a TWT information frame is used below for description.

The communication frame is the TWT information frame. For example, as shown in Table 6, the TWT information frame includes at least one of the following information: a category, an unprotected sub 1 GHz action, TWT information, and an MLO link information element (MLO Link Information element).

**Table 6**

| Order (order) | Information (information) |
|---|---|
| 1 | Category |
| 2 | Unprotected sub 1 GHz action |
| 3 | TWT information |
| 4 | MLO link information element |

For example, as shown in Table 7, the TWT information field includes at least one of the following: a TWT flow identifier field, a response request field, a next TWT request field, a next TWT field size field, an all TWT field, and a next TWT field.

**Table 7**

| Field name | TWT flow identifier | Response request | Next TWT request | Next TWT field size | All TWT | Next TWT |
|---|---|---|---|---|---|---|
| Bit | 3 | 1 | 1 | 2 | 1 | 32, 48, or 64 |

For example, if the all TWT field is set to the first value, for example, 1, the TWT information frame may be used to indicate to replan all TWT, and replanning includes suspension and/or resumption.

For a function of the all TWT field, refer to the second field in the foregoing embodiment. For example, when the all TWT field is set to 1, and the TWT information frame carries the first field (refer to the foregoing MLO link information element), the TWT information frame may be used to request to replan all TWT on one or more links indicated by a link identifier bitmap field (or a link identifier field) in the MLO link information element. For descriptions that the communication frame is the TWT information frame, the TWT information frame includes the all TWT field and the first field, and a value of the all TWT field in the TWT information frame is the first value, refer to the example 3 in the foregoing implementation 2. Details are not described herein again.

For example, when the all TWT field is set to 0, and the TWT information frame carries the MLO link information element, the TWT information frame may be used to request to replan a TWT agreement that is on one or more links indicated by a link identifier bitmap field in the MLO link information element and that corresponds to a combination including the TWT flow identifier. For descriptions that the communication frame is the TWT information frame, the TWT information frame includes the all TWT field and the first field, and a value of the all TWT field in the TWT information frame is a second value, adaptively refer to the example 4 in the foregoing implementation 2. Details are not described herein again.

For example, a non-AP STA affiliated with a non-AP MLD may send a TWT information frame to replan one or more TWT agreements, where the all TWT field in the TWT information frame is set to 0. The one or more TWT agreements are separately set up on a link corresponding to one or more bits of a link identifier bitmap subfield that is set to 1 in the MLO link information element, where one TWT agreement corresponds to one link, and the TWT agreement separately corresponds to a combination <a TWT flow identifier, a MAC address of a station operating on a link indicated by a link identifier bitmap, and a MAC address of a peer station operating on the link indicated by the link identifier bitmap> or <a TWT flow identifier, a MAC address of a station operating on a link indicated by a link identifier bitmap, a MAC address of a peer station operating on the link indicated by the link identifier bitmap, and the link indicated by the link identifier bitmap field>. (A non-AP STA affiliated with a non-AP MLD may reschedule one or more TWT agreements by sending a TWT Information frame with one or more bits in the Link ID Bitmap subfield of the MLO Link Information element set to 1 and All TWT field set to 0).

For example, when the all TWT field is set to 1, and the TWT information frame does not carry the MLO link information element, the TWT information frame indicates to request to replan all TWT agreements on all links of an MLD with which a station is affiliated. For descriptions that the communication frame is the TWT information frame, the TWT information frame includes the all TWT field, but does not include the first field, and a value of the all TWT field in the TWT information frame is the first value, refer to the foregoing implementation 1. Details are not described herein again.

It may be understood that the foregoing description of the TWT information frame is merely an example. For a specific description of the TWT information frame, adaptively refer to the foregoing TWT teardown frame.

It should be noted that the TWT agreement mentioned in this embodiment of this application may alternatively be a TWT plan. Generally, the TWT agreement is an individual TWT agreement, and the TWT plan is a broadcast TWT plan. Therefore, when the communication frame is the TWT information frame, for a specific description of the broadcast TWT plan, adaptively refer to the individual TWT agreement. Details are not described in this embodiment of this application.

402: The transmit end sends the communication frame, and correspondingly, the receive end receives the communication frame.

The receive end may be a peer STA operating on the same associated link as the transmit end.

403: The receive end tears down the TWT agreement based on the communication frame.

For a description of the communication frame, refer to step 401. Only a specific manner of tearing down the TWT agreement by the receive end is described as an example herein.

In an example, when the communication frame is the TWT teardown frame, with reference to the implementation 1, the receive end may tear down, based on the teardown all TWT setup on all links field, all TWT agreements on all associated links between the MLD with which the receive end is affiliated and the MLD with which the transmit end is affiliated.

In another example, when the communication frame is the TWT teardown frame, with reference to the implementation 2, the communication frame includes the first field and the second field, and the value of the second field is the first value. In this case, the receive end may tear down, based on the communication frame, all TWT agreements on the one or more links indicated by the first field.

In still another example, when the communication frame is the TWT teardown frame, with reference to the implementation 2, the communication frame includes the first field and the second field, and the value of the second field is the second value. In this case, the receive end may tear down, based on the communication frame, the TWT agreement that is on the one or more links indicated by the first field and that corresponds to the combination including the TWT flow identifier.

In yet still another example, the communication frame includes the indication information, and does not include the element for carrying the first field. In this case, the receive end may tear down, based on the communication frame, all TWT agreements on all associated links between the MLD with which the transmit end is affiliated and the MLD with which the receive end is affiliated.

Optionally, when the communication frame is the TWT information frame, the foregoing step 403 may alternatively be that the receive end replans the TWT agreement based on the communication frame. For example, when the all TWT field is set to 1, and the TWT information frame carries the first field, the receive end may replan, based on the TWT information frame, all the TWT on the one or more links indicated by the link identifier bitmap field (or the link identifier field) in the MLO link information element. For example, when the all TWT field is set to 0, and the TWT information frame carries the MLO link information element, the receive end may replan, based on the TWT information frame, the TWT agreement that is on the one or more links indicated by the link identifier bitmap field in the MLO link information element and that corresponds to the combination including the TWT flow identifier. For example, when the all TWT field is set to 1, and the TWT information frame does not carry the MLO link information element, the receive end may replan, based on the TWT information frame, all the TWT agreements on all the links of the MLD with which the station is affiliated.

In a possible implementation, the receive end may further send an acknowledgment frame, where the acknowledgment frame is used to acknowledge that the TWT agreement is successfully torn down.

In this embodiment of this application, the receive end of the communication frame may effectively learn, based on the first field and the second field, that the receive end may delete a TWT agreement set up by another link. This effectively improves flexibility of tearing down the TWT agreement.

It should be noted that, in embodiments of this application, a "field" is used as an example for illustration, and the "field" and a "subfield" are not specifically distinguished from each other. Although the "field" and the "subfield" are not specifically distinguished in embodiments of this application, a person skilled in the art may adaptively distinguish relationships between fields (or between elements and fields) shown in this application. Optionally, in an actual application, the field, the element, and the like in embodiments of this application may also be represented in a form of information. Therefore, representation forms of content such as the field, the subfield, the element, and the indication information are not limited in embodiments of this application.

The following describes communication apparatuses provided in embodiments of this application.

In this application, the communication apparatus is divided into functional modules based on the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that, in this application, module division is an example, and is merely a logical function division. During actual implementation, another division manner may be used. The following describes in detail communication apparatuses in embodiments of this application with reference to FIG. 9 to FIG. 11.

FIG. 9 is a schematic diagram of a structure of a communication apparatus according to an embodiment of this application. As shown in FIG. 9, the communication apparatus includes a processing unit 901 and a transceiver unit 902.

In some embodiments of this application, the communication apparatus may be the transmit end or the chip shown above, and the chip may be disposed in the transmit end. In other words, the communication apparatus may be configured to perform a step, a function, or the like performed by the transmit end in the method embodiment (in FIG. 4, FIG. 5a, or FIG. 5b).

The processing unit 901 is configured to generate a communication frame. The transceiver unit 902 is configured to output the communication frame.

For example, the transceiver unit 902 is further configured to input an acknowledgment frame.

In some other embodiments of this application, the communication apparatus may be the receive end or the chip shown above, and the chip may be disposed in the receive end. In other words, the communication apparatus may be configured to perform a step, a function, or the like performed by the receive end in the method embodiment (in FIG. 4).

The transceiver unit 902 is configured to input a communication frame. The processing unit 901 is configured to tear down a TWT agreement based on the communication frame.

It may be understood that, for specific descriptions of tearing down the TWT agreement by the processing unit 901, refer to the foregoing method embodiment. Details are not described herein again.

For example, the processing unit 901 is further configured to identify a TWT agreement (or a TWT plan) in the manner 1 to the manner 3 described above.

For example, the processing unit 901 is specifically configured to: if a value of a second field is a first value, tear down (or replan) all TWT agreements or all TWT plans on one or more links indicated by a first field.

For example, the processing unit 901 is specifically configured to: if a value of a second field is a second value, tear down (or replan) a TWT agreement that is on each of one or more links indicated by a first field and that corresponds to a combination including a TWT flow identifier, or if a value of a second field is a second value, tear down (or replan) a TWT plan that is on each of one or more links indicated by a first field and that corresponds to a combination including a broadcast TWT identifier.

For example, the transceiver unit 902 is further configured to output an acknowledgment frame.

It may be understood that specific descriptions of the transceiver unit and the processing unit described in this embodiment of this application are merely examples. For specific functions, performed steps, or the like of the transceiver unit and the processing unit, refer to the foregoing method embodiments. Details are not described herein again.

For descriptions of the communication frame, the first field, the second field, the third field, the TWT flow field, and the like in the foregoing embodiments, refer to the descriptions in the foregoing method embodiments. Details are not described herein one by one.

The foregoing describes the communication apparatus in this embodiment of this application. The following describes a possible product form of the communication apparatus. It should be understood that any product in any form having the function of the communication apparatus described in FIG. 9 falls within the protection scope of embodiments of this application. It should be further understood that the following description is merely an example, and does not limit a product form of the communication apparatus in embodiments of this application.

In a possible implementation, in the communication apparatus shown in FIG. 9, the processing unit 901 may be one or more processors. The transceiver unit 902 may be a transceiver, or the transceiver unit 902 may be a sending unit and a receiving unit. The sending unit may be a transmitter, and the receiving unit may be a receiver. The sending unit and the receiving unit are integrated into one device, for example, a transceiver. In this embodiment of this application, the processor and the transceiver may be coupled, or the like. A manner of connection between the processor and the transceiver is not limited in embodiments of this application. In a process of performing the foregoing method, an information sending process in the foregoing method may be understood as a process of outputting the foregoing information by the processor. When outputting the foregoing information, the processor outputs the foregoing information to the transceiver, so that the transceiver transmits the information. After the information is output by the processor, other processing may further need to be performed on the information before the information arrives at the transceiver. Similarly, an information receiving process in the foregoing method may be understood as a process of receives the foregoing input information by the processor. When the processor receives the input information, the transceiver receives the foregoing information, and inputs the foregoing information into the processor. Further, after the transceiver receives the foregoing information, other processing may need to be performed on the information before the information is input into the processor.

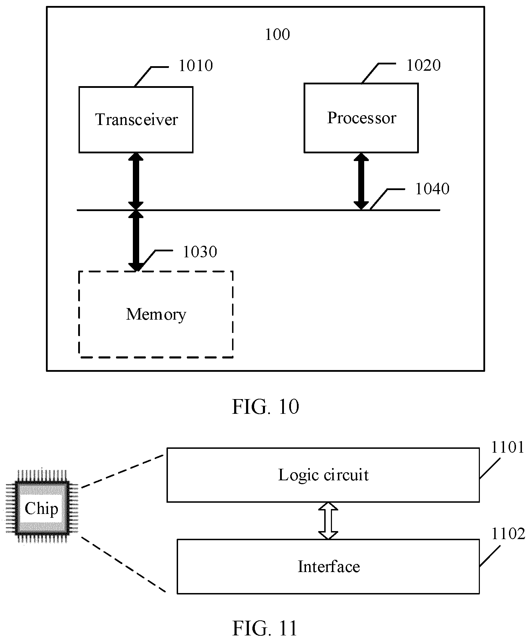

As shown in FIG. 10, a communication apparatus 100 includes one or more processors 1020 and a transceiver 1010.

In some embodiments of this application, the communication apparatus may be configured to perform a step, a function, or the like performed by the transmit end in the method embodiment (in FIG. 4).

The processor 1020 is configured to generate a communication frame. The transceiver 1010 is configured to send the communication frame.

For example, the transceiver 1010 is further configured to receive an acknowledgment frame.

In some other embodiments of this application, the communication apparatus may be configured to perform a step, a function, or the like performed by the receive end in the method embodiment (in FIG. 4).

The transceiver 1010 is configured to receive the communication frame. The processor 1020 is configured to tear down a TWT agreement based on the communication frame.

For example, the processor 1020 is further configured to identify a TWT agreement (or a TWT plan) in the manner 1 to the manner 3 described above.

For example, the processor 1020 is specifically configured to: if a value of a second field is a first value, tear down (or replan) all TWT agreements or all TWT plans on one or more links indicated by a first field.

For example, the processor 1020 is specifically configured to: if a value of a second field is a second value, tear down (or replan) a TWT agreement that is on each of one or more links indicated by a first field and that corresponds to a combination including a TWT flow identifier, or if a value of a second field is a second value, tear down (or replan) a TWT plan that is on each of one or more links indicated by a first field and that corresponds to a combination including a broadcast TWT identifier.

For example, the transceiver 1010 is further configured to send an acknowledgment frame.

It may be understood that specific descriptions of the transceiver and the processor described in this embodiment of this application are merely examples. For specific functions, performed steps, or the like of the transceiver and the processor, refer to the foregoing method embodiments. Details are not described herein again.

For descriptions of the communication frame, the first field, the second field, the third field, the TWT flow field, and the like in the foregoing embodiments, refer to the descriptions in the foregoing method embodiments. Details are not described herein one by one.

In each implementation of the communication apparatus shown in FIG. 10, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 100 may further include one or more memories 1030, configured to store program instructions and/or data. The memory 1030 is coupled to the processor 1020. Coupling in this embodiment of this application is indirect coupling or a communication connection between apparatuses, units, or modules, may be in an electrical form, a mechanical form, or another form, and is used for information exchange between the apparatuses, the units, or the modules. The processor 1020 may operate with the memory 1030. The processor 1020 may execute the program instructions stored in the memory 1030. Optionally, at least one of the one or more memories may be included in the processor.

A specific connection medium between the transceiver 1010, the processor 1020, and the memory 1030 is not limited in embodiments of this application. In this embodiment of this application, in FIG. 10, the memory 1030, the processor 1020, and the transceiver 1010 are connected to each other through a bus 1040. The bus is represented by a thick line in FIG. 10. A manner of connection between other components is merely described as an example, but is not limited thereto. The bus may be classified into an address bus, a data bus, a control bus, or the like. For ease of representation, the bus is represented by only one thick line in FIG. 10. However, this does not mean that there is only one bus or one type of bus.

In this embodiment of this application, the processor may be a general-purpose processor, a digital signal processor, an application-specific integrated circuit, a field-programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed and accomplished by a hardware processor, or may be performed and accomplished by using a combination of hardware and software modules in the processor.

In this embodiment of this application, the memory may include but is not limited to a nonvolatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this is not limited thereto. The memory in this embodiment of this application may alternatively be a circuit or any other apparatus that can implement a storage function, and is configured to store the program instructions and/or the data.

For example, the processor 1020 is mainly configured to process a communication protocol and communication data, control the entire communication apparatus, execute a software program, and process data of the software program. The memory 1030 is mainly configured to store the software program and data. The transceiver 1010 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

After the communication apparatus is powered on, the processor 1020 may read the software program in the memory 1030, interpret and execute instructions of the software program, and process data of the software program. When data needs to be sent wirelessly, the processor 1020 performs baseband processing on the to-be-sent data, and then outputs a baseband signal to a radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives the radio frequency signal through the antenna, converts the radio frequency signal into a baseband signal, and outputs the baseband signal to the processor 1020. The processor 1020 converts the baseband signal into data and processes the data.

In another implementation, the radio frequency circuit and the antenna may be disposed independently of the processor that performs baseband processing. For example, in a distributed scenario, the radio frequency circuit and the antenna may be disposed remotely and independently of the communication apparatus.

It may be understood that the communication apparatus described in this embodiment of this application may further include more components or the like than those shown in FIG. 10. This is not limited in embodiments of this application. The foregoing methods performed by the processor and the transceiver are merely examples. For specific steps performed by the processor and the transceiver, refer to the methods described above.

In another possible implementation, in the communication apparatus shown in FIG. 9, the processing unit 901 may be one or more logic circuits, and the transceiver unit 902 may be an input/output interface, which is also referred to as a communication interface, an interface circuit, an interface, or the like. Alternatively, the transceiver unit 902 may be a sending unit and a receiving unit. The sending unit may be an output interface, and the receiving unit may be an input interface. The sending unit and the receiving unit are integrated into one unit, for example, an input/output interface. As shown in FIG. 11, a communication apparatus shown in FIG. 11 includes a logic circuit 1101 and an interface 1102. In other words, the processing unit 901 may be implemented by the logic circuit 1101, and the transceiver unit 902 may be implemented by the interface 1102. The logic circuit 1101 may be a chip, a processing circuit, an integrated circuit, a system on chip (system on chip, SoC), or the like. The interface 1102 may be a communication interface, an input/output interface, a pin, or the like. For example, FIG. 11 is an example in which the communication apparatus is a chip. The chip includes the logic circuit 1101 and the interface 1102.

In this embodiment of this application, the logic circuit and the interface may be further coupled to each other. A specific manner of connection between the logical circuit and the interface is not limited in embodiments of this application.

In some embodiments of this application, the communication apparatus may be configured to perform a step, a function, or the like performed by the transmit end in the method embodiment (in FIG. 4).

The logic circuit 1101 is configured to generate a communication frame. The interface 1102 is configured to output the communication frame.

For example, the interface 1102 is further configured to input an acknowledgment frame.

In some other embodiments of this application, the communication apparatus may be configured to perform a step, a function, or the like performed by the receive end in the method embodiment (in FIG. 4).

The interface 1102 is configured to input the communication frame. The logic circuit 1101 is configured to tear down a TWT agreement based on the communication frame.

For example, the logic circuit 1101 is further configured to identify a TWT agreement (or a TWT plan) in the manner 1 to the manner 3 described above.

For example, the logic circuit 1101 is specifically configured to: if a value of a second field is a first value, tear down (or replan) all TWT agreements or all TWT plans on one or more links indicated by a first field.

For example, the logic circuit 1101 is specifically configured to: if a value of a second field is a second value, tear down (or replan) a TWT agreement that is on each of one or more links indicated by a first field and that corresponds to a combination including a TWT flow identifier, or if a value of a second field is a second value, tear down (or replan) a TWT plan that is on each of one or more links indicated by a first field and that corresponds to a combination including a broadcast TWT identifier.

For example, the interface 1102 is further configured to output an acknowledgment frame.

It may be understood that specific descriptions of the logic circuit and the interface described in this embodiment of this application are merely examples. For specific functions, performed steps, or the like of the logic circuit and the interface, refer to the foregoing method embodiments. Details are not described herein again.

For descriptions of the communication frame, the first field, the second field, the third field, the TWT flow field, and the like in the foregoing embodiments, refer to the descriptions in the foregoing method embodiments. Details are not described herein one by one.

It may be understood that the communication apparatus described in this embodiment of this application may implement the method provided in embodiments of this application in a form of hardware or in a form of software. This is not limited in embodiments of this application.

An embodiment of this application further provides a wireless communication system. The wireless communication system includes a transmit end and a receive end. The transmit end and the receive end may be configured to perform the method in any embodiment (for example, FIG. 4).

In addition, this application further provides a computer program. The computer program is used to implement an operation and/or processing performed by the transmit end in the method provided in this application.

This application further provides a computer program. The computer program is used to implement an operation and/or processing performed by the receive end in the method provided in this application.

This application further provides a computer-readable storage medium. The computer-readable storage medium stores computer code. When the computer code is run on a computer, the computer is enabled to perform an operation and/or processing performed by the transmit end in the method provided in this application.

This application further provides a computer-readable storage medium. The computer-readable storage medium stores computer code. When the computer code is run on a computer, the computer is enabled to perform an operation and/or processing performed by the receive end in the method provided in this application.

This application further provides a computer program product. The computer program product includes computer code or a computer program. When the computer code or the computer program is run on a computer, an operation and/or processing performed by the transmit end in the method provided in this application are/is performed.

This application further provides a computer program product. The computer program product includes computer code or a computer program. When the computer code or the computer program is run on a computer, an operation and/or processing performed by the receive end in the method provided in this application are/is performed.

In the several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located at one location, or may be distributed on a plurality of network units. Some or all of the units may be selected based on actual requirements to achieve the technical effect of the solutions provided in embodiments in this application.

In addition, functional units in embodiments of this application may be integrated into one processing unit, each of the functional units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium, and includes several instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multi-link communication method, wherein the method comprises:
generating a communication frame, wherein the communication frame comprises a first field and a second field, the first field indicates one link, and the second field indicates to tear down a target wake time TWT agreement or a TWT plan between multi-link devices; and
sending the communication frame.

2. The method according to claim 1, wherein if a value of the second field is a first value, the communication frame indicates to tear down all TWT agreements or TWT plans on the link indicated by the first field.

3. The method according to claim 1, wherein if a value of the second field is a second value, the communication frame indicates to tear down a TWT agreement that is on the link indicated by the first field and that corresponds to a combination comprising a TWT flow identifier, or the communication frame indicates to tear down a TWT plan that is on the link indicated by the first field and that corresponds to a combination comprising a broadcast TWT identifier.

4. The method according to claim 3, wherein the communication frame further comprises a third field, and the third field is used to carry the TWT flow identifier, or the third field is used to carry the broadcast TWT identifier.

5. The method according to any one of claims 1 to 4, wherein the TWT agreement corresponds to any one of the following combinations that each comprise the TWT flow identifier:
a combination of the TWT flow identifier, a medium access control MAC address of a station on the link indicated by the first field, and a MAC address of a peer station on the link indicated by the first field, or
a combination of the TWT flow identifier, a MAC address of a multi-link device with which a transmit end of the communication frame is affiliated, a MAC address of a multi-link with which a receive end of the communication frame is affiliated, and the link indicated by the first field; and
the TWT plan corresponds to any one of the following combinations that each comprise the broadcast TWT identifier:
a combination of the broadcast TWT identifier and a medium access control MAC address of an access station on the link indicated by the first field, or
a combination of the broadcast TWT identifier, a MAC address of a multi-link device with which an access station on the link indicated by the first field is affiliated, and the link indicated by the first field.

6. The method according to any one of claims 1 to 5, wherein the first field is comprised in a multi-link operation information element in the communication frame.

7. The method according to any one of claims 1 to 6, wherein the second field is comprised in a TWT flow field in the communication frame.

8. A multi-link communication method, wherein the method comprises:
receiving a communication frame, wherein the communication frame comprises a first field and a second field, the first field indicates one link, and the second field indicates to tear down a target wake time TWT agreement or a TWT plan between multi-link devices; and
tearing down the TWT agreement or the TWT plan based on the communication frame.

9. The method according to claim 8, wherein the method further comprises:
determining the TWT agreement based on any one of the following combinations that each comprise a TWT flow identifier:
a combination of the TWT flow identifier, a medium access control MAC address of a station on the link indicated by the first field, and a MAC address of a peer station on the link indicated by the first field, or
a combination of the TWT flow identifier, a MAC address of a multi-link device with which a transmit end of the communication frame is affiliated, a MAC address of a multi-link with which a receive end of the communication frame is affiliated, and the link indicated by the first field; or
determining the TWT plan based on any one of the following combinations that each comprise a broadcast TWT identifier:
a combination of the broadcast TWT identifier and a medium access control MAC address of an access station on the link indicated by the first field, or
a combination of the broadcast TWT identifier, a MAC address of a multi-link device with which an access station on the link indicated by the first field is affiliated, and the link indicated by the first field.

10. The method according to claim 8 or 9, wherein the tearing down the TWT agreement or the TWT plan based on the communication frame comprises:
if a value of the second field is a first value, tearing down all TWT agreements or TWT plans on the link indicated by the first field.

11. The method according to claim 8 or 9, wherein the tearing down the TWT agreement or the TWT plan based on the communication frame comprises:
if a value of the second field is a second value, tearing down a TWT agreement that is on the link indicated by the first field and that corresponds to the combination comprising the TWT flow identifier, or
if a value of the second field is a second value, tearing down a TWT plan that is on the link indicated by the first field and that corresponds to the combination comprising the broadcast TWT identifier.

12. The method according to any one of claims 8 to 11, wherein the first field is comprised in a multi-link operation information element in the communication frame.

13. The method according to any one of claims 8 to 12, wherein the second field is comprised in a TWT flow field in the communication frame.

14. A multi-link communication method, wherein a plurality of associated links have been established between a multi-link device with which a transmit end of a communication frame is affiliated and a multi-link device with which a receive end of the communication frame is affiliated; and the method comprises:
generating the communication frame, wherein the communication frame comprises indication information, and the indication information indicates to tear down TWT agreements or TWT plans on the plurality of associated links established between the multi-link devices; and
sending the communication frame.

15. A multi-link communication method, wherein a plurality of associated links have been established between a multi-link device with which a transmit end of a communication frame is affiliated and a multi-link device with which a receive end of the communication frame is affiliated; and the method comprises:
receiving the communication frame, wherein the communication frame comprises indication information, and the indication information indicates to tear down TWT agreements or TWT plans on the plurality of associated links established between the multi-link devices; and
tearing down, based on the communication frame, the TWT agreements or the TWT plans on the plurality of associated links established between the multi-link devices.

16. The method according to claim 14 or 15, wherein a value of the indication information is a first value.

17. The method according to any one of claims 14 to 16, wherein the indication information is comprised in a TWT flow field in the communication frame.

18. The method according to any one of claims 14 to 17, wherein the TWT agreement corresponds to any one of the following combinations that each comprise a TWT flow identifier:
a combination of the TWT flow identifier, a medium access control MAC address of a station on a link indicated by a first field, and a MAC address of a peer station on the link indicated by the first field, or
a combination of the TWT flow identifier, a MAC address of the multi-link device with which the transmit end of the communication frame is affiliated, a MAC address of the multi-link with which the receive end of the communication frame is affiliated, and a link indicated by a first field; and
the TWT plan corresponds to any one of the following combinations that each comprise a broadcast TWT identifier:
a combination of the broadcast TWT identifier and a medium access control MAC address of an access station on the link indicated by the first field, or
a combination of the broadcast TWT identifier, a MAC address of a multi-link device with which an access station on the link indicated by the first field is affiliated, and the link indicated by the first field.

19. A communication apparatus, comprising a unit configured to perform the method according to any one of claims 1 to 18.

20. A communication apparatus, comprising a processor and a memory, wherein
the memory is configured to store instructions; and
the processor is configured to execute the instructions, to perform the method according to any one of claims 1 to 18.

21. A communication apparatus, comprising a logic circuit and an interface, wherein the logic circuit is coupled to the interface; and
the interface is configured to input and/or output code instructions, and the logic circuit is configured to execute the code instructions, to perform the method according to any one of claims 1 to 18.

22. A computer-readable storage medium, wherein the computer-readable storage medium is configured to store a computer program, and when the computer program is executed, the method according to any one of claims 1 to 18 is performed.

23. A computer program, wherein when the computer program is executed, the method according to any one of claims 1 to 18 is performed.

24. A communication system, wherein the communication system comprises a transmit end and a receive end, wherein the transmit end is configured to perform the method according to any one of claims 1 to 7, and the receive end is configured to perform the method according to any one of claims 8 to 13; or the transmit end is configured to perform the method according to claim 14, 16, 17 or 18, and the receive end is configured to perform the method according to any one of claims 15 to 18.
